# EUROPEAN PATENT APPLICATION

(11) **EP 4 769 100 A1**
(43) Date of publication of application: **01.07.2026**
(21) Application number: 24884076.1
(22) Date of filing: 31.07.2024
(51) Int. Cl.: G06F 3/0484, G06F 3/0488

(54) **CONTENT PROCESSING METHOD, AND GRAPHICAL INTERFACE AND ELECTRONIC DEVICE**

(30) Priority: 03.11.2023 CN 202311463336; 27.12.2023 CN 202311832938
(71) Applicant: Honor Device Co., Ltd., Shenzhen, Guangdong 518040 (CN)
(72) Inventor: ZHOU, Shuang, Shenzhen, Guangdong 518040 (CN); FENG, Haijun, Shenzhen, Guangdong 518040 (CN)
(74) Representative: Gill Jennings & Every LLP
(86) International application number: PCT/CN2024/108664
(87) International publication number: WO 2025/092069

(57) **Abstract**

This application provides a content processing method, a graphical interface, and an electronic device. The method includes: An electronic device displays an interface of a first application, where the interface includes first content such as text or an image; receives a touch and hold operation on the first content, and displays, if the touch and hold operation lasts for a first duration, first prompt information provided by the first application and second prompt information provided by a second application, where the first prompt information includes an option for processing the first content, and the second prompt information indicates a user to continue input of the touch and hold operation; displays, if the touch and hold operation lasts for a second duration, a first panel provided by the second application, where the first panel includes the first content; and shares the first content to a target object if an operation of dragging the first panel to a target area and releasing is received.

## Description

This application claims priorities to Chinese Patent Application No. 202311463336.7, filed with the China National Intellectual Property Administration on November 3, 2023 and entitled "CONTENT SELECTION METHOD, GRAPHICAL INTERFACE, AND ELECTRONIC DEVICE", and to Chinese Patent Application No. 202311832938.5, filed with the China National Intellectual Property Administration on December 27, 2023 and entitled "CONTENT PROCESSING METHOD, GRAPHICAL INTERFACE, AND ELECTRONIC DEVICE", both of which are incorporated herein by reference in their entireties.

### TECHNICAL FIELD

This application relates to the field of terminals, and in particular, to a content processing method, a graphical interface, and an electronic device.

### BACKGROUND

Currently, various types of applications provide more abundant content, and users have more processing requirements for the content. How to provide a method for processing content for the users is a problem to be urgently resolved.

### SUMMARY

This application provides a content processing method, a graphical interface, and an electronic device. The method includes: An electronic device displays an interface of a first application, where the interface includes first content such as text or an image; receives a touch and hold operation on the first content, and displays, if the touch and hold operation lasts for a first duration, first prompt information provided by the first application and second prompt information provided by a second application, where the first prompt information includes an option for processing the first content, and the second prompt information indicates a user to continue input of the touch and hold operation; displays, if the touch and hold operation lasts for a second duration, a first panel provided by the second application, where the first panel includes the first content; and shares the first content to a target object if an operation of dragging the first panel to a target area and releasing is received.

According to a first aspect, this application provides a content processing method, applied to an electronic device. The method includes: displaying an interface of a first application, where the interface includes first content; receiving a touch and hold operation on the first content; displaying first prompt information in response to that the touch and hold operation lasts for a first duration; displaying a first panel in response to that the touch and hold operation lasts for a second duration, where the first panel includes the first content, and the second duration is longer than the first duration; and sharing the first content to a target object if an operation of dragging the first panel to a target area and releasing is received. The first content is shared to the target object in response to a first operation on the first panel.

After the method provided in the first aspect is implemented, different content processing functions are provided for a user in sequence through the simple touch and hold operation. This ensures compatible implementation of two content processing functions, and meets a requirement of the user for sharing content in an application, to improve user experience.

With reference to the method described in the first aspect, the method further includes: displaying second prompt information in response to that the touch and hold operation lasts between the first duration and the second duration, where the second prompt information is used for guiding continued input of the touch and hold operation.

In this way, the user may be guided to input a corresponding trigger operation, to improve interaction experience between the user and the device.

With reference to the method described in the first aspect, the second prompt information includes any one of the following: a gradually zoomed-out aperture; a gradually filled progress circle; gradually diffused light points; or a fence flashing around the first content.

In this way, a more interesting guiding effect can be provided for the user.

With reference to the method described in the first aspect, after the first panel is displayed, the method further includes: stopping displaying the second prompt letter, and further stopping displaying the first prompt information in response to the first operation.

In this way, display of unnecessary elements can be reduced, to avoid interference with an element the user is focused on, and improve a display effect on the interface.

With reference to the method described in the first aspect, the first prompt information is option information that is provided by the first application and that is used for processing the first content, the second prompt information is information provided by a second application, and the second application is any one of an application program, a service, or a component.

In this way, a content processing function of the first application can be reserved, and without affecting the native content processing function of the first application, the user is prompted, by the second application, on how to use an extended content processing function provided by the second application, to ensure that the two content processing functions can be compatibly implemented by the electronic device.

With reference to the method described in the first aspect, the first operation is an operation of dragging the first panel to the target area of the interface and releasing.

In this way, a more convenient and abundant content sharing method can be provided for the user. The user may share content to the target object by only dragging the content to the target area and then releasing the content.

With reference to the method described in the first aspect, the target area is at an icon of a third application, the target object is the third application, and sharing the first content to the target object in response to the first operation on the first panel specifically includes: receiving an operation of dragging the first panel to a second area; displaying a menu bar, where the menu bar includes the icon of the third application; receiving an operation of continuing to drag the first panel to the icon of the third application and releasing; and sharing the first content to the third application.

In this way, a requirement of the user to share content of the first application to another application can be met by using the extended content processing function of this application. In other words, a cross-application transmission function is implemented.

With reference to the method described in the first aspect, before the menu bar is displayed, the method further includes: displaying a light band in a third area, where the third area partially or completely overlaps the second area.

In this way, the user can be prompted, by displaying the light band in a particular area, to drag a panel to the particular area to trigger display of the menu bar. This may make it convenient for the user to drag the panel to the particular area, to improve interaction experience of the user.

With reference to the method described in the first aspect, the target area is at a second split-screen, the target object is the second split-screen, and sharing the first content to the target object in response to the first operation on the first panel specifically includes: receiving an operation of dragging the first panel from a first split-screen to the second split-screen and releasing; and sharing the first content to the second split-screen.

In this way, in a split-screen scenario, content of the first application can be shared to another sub-screen by using the extended content processing function of this application. In other words, a cross-screen transmission function is implemented.

With reference to the method described in the first aspect, the target area is a fourth area of the electronic device, the target object is a target electronic device, and sharing the first content to the target object in response to the first operation on the first panel specifically includes: receiving an operation of dragging the first panel to the fourth area and releasing; and sharing the first content to the target electronic device.

In this way, in a cross-device transmission scenario, content of the first application can be shared, by using the extended content processing function of this application, to another electronic device that performs collaborative processing. In other words, a cross-device sharing function is implemented.

With reference to the method described in the first aspect, after the first operation and before the first content is shared to the target object, the method further includes: switching the first panel from a first display form to a second display form.

In this way, a display form of target text is switched, so that an area to which the target text is dragged can be better adapted in a dragging process, to improve interaction experience.

With reference to the method described in the first aspect, a coverage rate of the first prompt information over the first content exceeds a preset value.

In this way, when the first prompt information blocks the first content that the user is focused on, the user may be guided, by using the second prompt information, to continue touching and holding, to avoid misleading the user to terminate the touch and hold operation.

With reference to the method described in the first aspect, the first prompt information includes any one of the following: a toolbar or a floating window.

With reference to the method described in the first aspect, the first content includes an image and/or text.

In this way, a requirement of the user for processing various types of content can be met.

With reference to the method described in the first aspect, the method further includes: obtaining the first content through a screenshot in response to that the touch and hold operation lasts between the first duration and the second duration.

According to a second aspect, this application provides, for example, a content processing method, applied to an electronic device. The method includes: displaying an interface of a first application, where the interface includes first content; receiving a touch and hold operation on the first content; displaying first prompt information in response to that the touch and hold operation lasts for a first duration; displaying a first panel in response to that the touch and hold operation lasts for a second duration, where the first panel includes the first content, and the second duration is longer than the first duration; displaying an editing tool in response to a second operation on the first panel; and editing the first content into second content in response to an operation on the editing tool.

With reference to the method described in the second aspect, the method further includes: sharing the second content to a target object in response to a first operation on the second content.

After the method provided in the second aspect is implemented, different content processing functions are provided for a user in sequence through the simple touch and hold operation. This ensures compatible implementation of two content processing functions, and meets a requirement of the user for sharing content in an application, to improve user experience. One content processing function includes providing a function for the user to freely select, from the application, content in which the user is interested, to support the user to perform a next step of processing on the content in which the user is interested, so as to meet a user requirement.

With reference to the method described in the second aspect, the method further includes: displaying second prompt information in response to that the touch and hold operation lasts between the first duration and the second duration, where the second prompt information is used for guiding continued input of the touch and hold operation.

In this way, a more convenient and abundant content sharing method can be provided for the user. The user may share selected content to the target object by only dragging the selected content to the target area and then releasing the content.

With reference to the method described in the second aspect, the second prompt information includes any one of the following: a gradually zoomed-out aperture; a gradually filled progress circle; gradually diffused light points; or a fence flashing around the first content.

In this way, a more interesting guiding effect can be provided for the user.

With reference to the method described in the second aspect, after the first panel is displayed, the method further includes: stopping displaying the second prompt information, and stopping displaying the first prompt information in response to the first operation.

In this way, display of unnecessary elements can be reduced, to avoid interference with an element the user is focused on, and improve a display effect on the interface.

With reference to the method described in the second aspect, the first prompt information is option information that is provided by the first application and that is used for processing the first content, the second prompt information is information provided by a second application, and the second application is any one of an application program, a service, or a component.

In this way, a content processing function of the first application can be reserved, and without affecting the native content processing function of the first application, the user is prompted, by the second application, on how to use an extended content processing function provided by the second application, to ensure that the two content processing functions can be compatibly implemented by the electronic device.

With reference to the method described in the second aspect, the first operation is an operation of dragging to the target area of the interface and releasing.

In this way, a more convenient and abundant content sharing method can be provided for the user. The user may share content to the target object by only dragging the content to the target area and then releasing the content.

With reference to the method described in the second aspect, the target area is at an icon of a third application, the target object is the third application, and the sharing the first content to a target object in response to a first operation on the first panel specifically includes: receiving an operation of dragging the first panel to a second area; displaying a menu bar, where the menu bar includes the icon of the third application; receiving an operation of continuing to drag the first panel to the icon of the third application and releasing; and sharing the first content to the third application.

In this way, a requirement of the user to share content of the first application to another application can be met by using the extended content processing function of this application. In other words, a cross-application transmission function is implemented.

With reference to the method described in the second aspect, before the menu bar is displayed, the method further includes: displaying a light band in a third area, where the third area partially or completely overlaps the second area.

In this way, the user can be prompted, by displaying the light band in a particular area, to drag a panel to the particular area to trigger display of the menu bar. This may make it convenient for the user to drag the panel to the particular area, to improve interaction experience of the user.

With reference to the method described in the second aspect, the target area is at a second split-screen, the target object is the second split-screen, and the sharing the first content to a target object in response to a first operation on the first panel specifically includes: receiving an operation of dragging the first panel from a first split-screen to the second split-screen and releasing; and sharing the first content to the second split-screen.

In this way, in a split-screen scenario, content of the first application can be shared to another sub-screen by using the extended content processing function of this application. In other words, a cross-screen transmission function is implemented.

With reference to the method described in the second aspect, the target area is a fourth area of the electronic device, the target object is a target electronic device, and the sharing the first content to a target object in response to a first operation on the first panel specifically includes: receiving an operation of dragging the first panel to the fourth area and releasing; and sharing the first content to the target electronic device.

In this way, in a cross-device transmission scenario, content of the first application can be shared, by using the extended content processing function of this application, to another electronic device that performs collaborative processing. In other words, a cross-device sharing function is implemented. With reference to the method described in the second aspect, after the first operation and before the first content is shared to the target object, the method further includes: switching the first panel from a first display form to a second display form.

In this way, a display form of target text is switched, so that an area to which the target text is dragged can be better adapted in a dragging process, to improve interaction experience.

With reference to the method described in the second aspect, a coverage rate of the first prompt information over the first content exceeds a preset value.

In this way, when the first prompt information blocks the first content that the user is focused on, the user may be guided, by using the second prompt information, to continue touching and holding, to avoid misleading the user to terminate the touch and hold operation.

With reference to the method described in the second aspect, the first prompt information includes any one of the following: a toolbar or a floating window.

With reference to the method described in the second aspect, the first content includes an image and/or text.

In this way, a requirement of the user for processing various types of content can be met.

With reference to the method described in the second aspect, the method further includes: obtaining the first content through a screenshot in response to that the touch and hold operation lasts between the first duration and the second duration.

According to a third aspect, an embodiment of this application provides an electronic device. The electronic device includes one or more processors and one or more memories. The one or more memories are coupled to the one or more processors, the one or more memories are configured to store computer program code, the computer program code includes computer instructions, and when the one or more processors execute the computer instructions, the method described in any one of the first aspect or the second aspect is performed.

According to a fourth aspect, an embodiment of this application provides a computer-readable storage medium including instructions. When the instructions are run on an electronic device, the method described in any one of the first aspect or the second aspect is performed.

### BRIEF DESCRIPTION OF DRAWINGS

FIG. 1A to FIG. 1D are schematic diagrams of several operation interfaces that are of processing images and that are provided by applications;
FIG. 1E to FIG. 1G are schematic diagrams of several operation interfaces that are of processing text and that are provided by applications;
FIG. 2A is a schematic diagram of a group of operation interfaces of processing an image according to this application;
FIG. 2B-1 and FIG. 2B-2 are a schematic diagram of a group of operation interfaces of processing text according to this application;
FIG. 3A is a schematic diagram of a group of operation interfaces of selecting an image according to an embodiment of this application;
FIG. 3B is a schematic diagram of a group of operation interfaces of transmitting an image according to an embodiment of this application;
FIG. 4A is a schematic diagram of another group of operation interfaces of selecting an image according to an embodiment of this application;
FIG. 4B is a schematic diagram of another group of operation interfaces of transmitting an image according to an embodiment of this application;
FIG. 5A is a schematic diagram of another group of operation interfaces of selecting an image according to an embodiment of this application;
FIG. 5B is a schematic diagram of another group of operation interfaces of transmitting an image according to an embodiment of this application;
FIG. 6A is a schematic diagram of another group of operation interfaces of selecting an image according to an embodiment of this application;
FIG. 6B is a schematic diagram of another group of operation interfaces of transmitting an image according to an embodiment of this application;
FIG. 7A is a schematic diagram of a group of operation interfaces of selecting text according to an embodiment of this application;
FIG. 7B is a schematic diagram of a group of operation interfaces of transmitting selected text according to an embodiment of this application;
FIG. 8 is a schematic diagram of a hardware architecture of an electronic device according to an embodiment of this application; and
FIG. 9 is a schematic diagram of software of an electronic device according to an embodiment of this application.

### DESCRIPTION OF EMBODIMENTS

The following clearly and thoroughly describes technical solutions in embodiments of this application with reference to the accompanying drawings. In descriptions of embodiments of this application, unless otherwise specified, "/" represents "or". For example, A/B may represent A or B. In this specification, "and/or" is merely an association relationship for describing associated objects, and represents that three relationships may exist. For example, A and/or B may represent the following three cases: Only A exists, both A and B exist, and only B exists.

The terms "first" and "second" below are used for descriptive purposes only, and cannot be construed as implying or implying relative importance or implicitly indicating the number of technical features indicated. Therefore, a feature defined with "first" and "second" may explicitly or implicitly includes one or more features. In the descriptions of embodiments of this application, unless otherwise stated, "plurality of" means two or more.

An "embodiment" in this application means that specific features, structures, or characteristics described with reference to this embodiment may be included in at least one embodiment of this application. The phrase shown in various locations in the specification may not necessarily refer to a same embodiment, and is not an independent or optional embodiment exclusive from another embodiment. A person skilled in the art explicitly or implicitly understands that embodiments described in this application may be combined with other embodiments.

The term "user interface (user interface, UI)" in the following embodiments of this application is a medium interface that performs interaction and information exchange between an application program or an operating system and a user, and implements conversion between an internal form of information and a form that can be received by the user. The user interface is source code compiled by using a specific computer language such as java or an extensible markup language (extensible markup language, XML). The interface source code is parsed and rendered on an electronic device, and finally presented as content that can be identified by the user. A common representation form of the user interface is a graphical user interface (graphic user interface, GUI), which is a user interface that is related to a computer operation and that is displayed in a graphical manner. The user interface may be a visible interface element, such as text, an icon, a button, a menu, a tab, a text box, a dialog box, a status bar, a navigation bar, and Widget, displayed on a display screen of the electronic device.

Currently, controls are provided for various types of application programs (which may also be referred to as applications or APPs). The application may display content such as text or an image by using the control. In addition, the application may detect an operation on the control, to provide the user with a manner of further processing the content in the control.

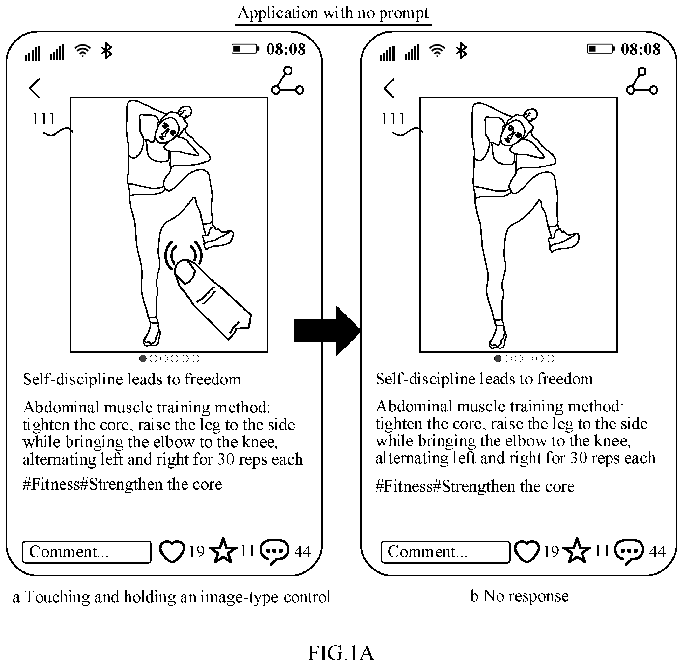

**FIG. 1A to FIG. 1D** **are schematic diagrams of several operation interfaces that are of processing images and that are provided by applications.**

In an interface of an application shown in FIG. 1A, a control 111 included in the interface is an image-type control that does not support selection. After a user inputs an operation such as a touch and hold operation to the control 111, the application does not respond, in other words, the application does not trigger selection of an image in the control 111.

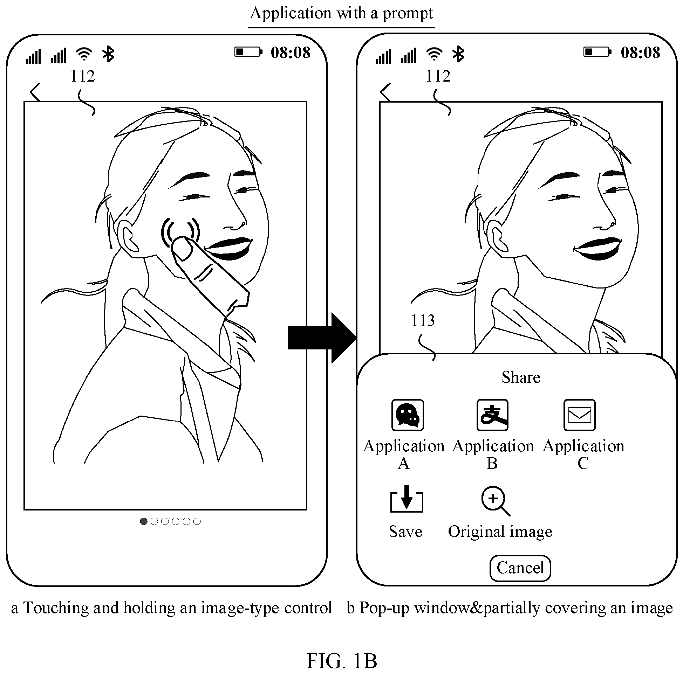

In an application shown in FIG. 1B, a control 112 included in the application is an image-type control that supports selection. After a user inputs an operation such as a touch and hold operation to the control 112, a window 113 pops up in the application. The window 113 may include a plurality of processing options, for example, sharing to different applications, saving, and viewing an original image. The window 113 further partially covers an image in the control 112.

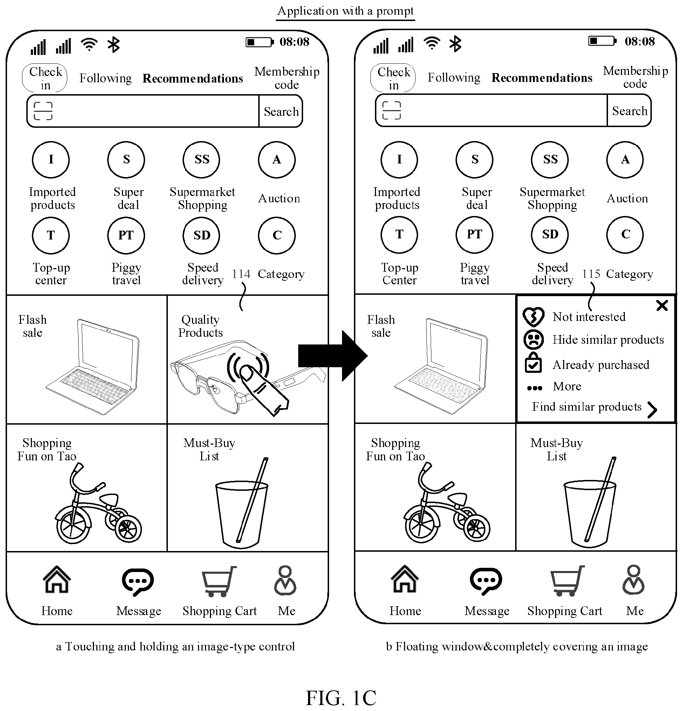

In an interface of an application shown in FIG. 1C, a control 114 included in the interface is an image-type control that supports selection. After a user inputs an operation such as a touch and hold operation to the control 114, the application displays a floating window 115 on an upper layer of the control 114. The floating window 115 includes a plurality of processing options, for example, not interested, hide similar products, already purchased, more, and find similar products. The floating window 115 completely covers an image displayed in the control 114.

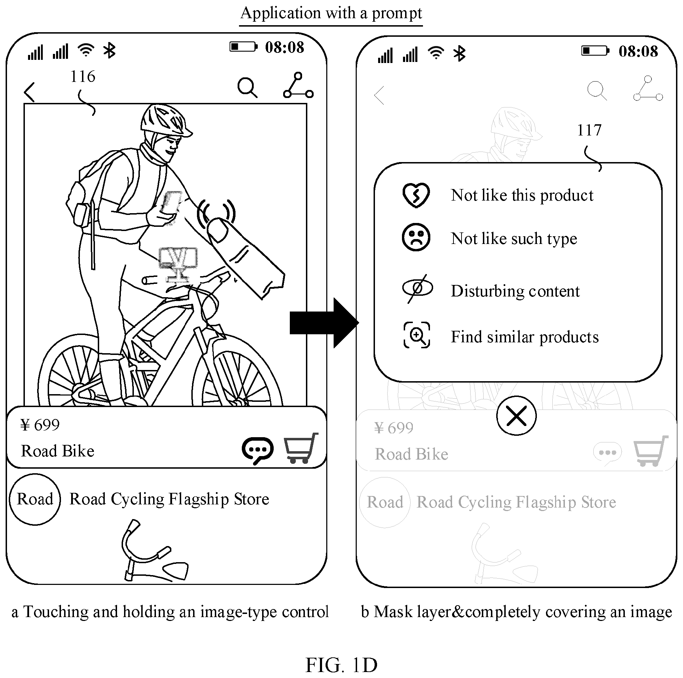

In an interface of an application shown in FIG. 1D, a control 116 included in the interface is an image-type control that supports selection. After a user inputs an operation such as a touch and hold operation to the control 116, the application displays a mask layer on an upper layer of the control 116 and displays a window 117 on the mask layer. The window 117 includes a plurality of processing options, for example, not like this product, not like such type, disturbing content, and find similar products. Although the mask layer is semi-transparent, the mask layer completely covers an image displayed in the control 116.

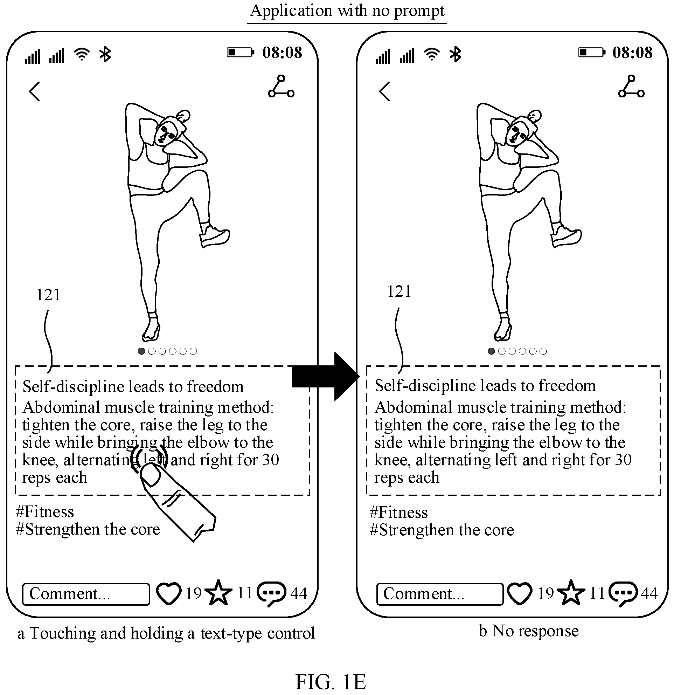

**FIG. 1E to FIG. 1G** **are schematic diagrams of several operation interfaces that are of processing text and that are provided by applications.**

In an interface of an application shown in FIG. 1E, a control 121 included in the interface is a text-type control that does not support selection. After a user inputs an operation such as a touch and hold operation to the control 121, the application does not respond, in other words, the application does not trigger selection of text in the control 121.

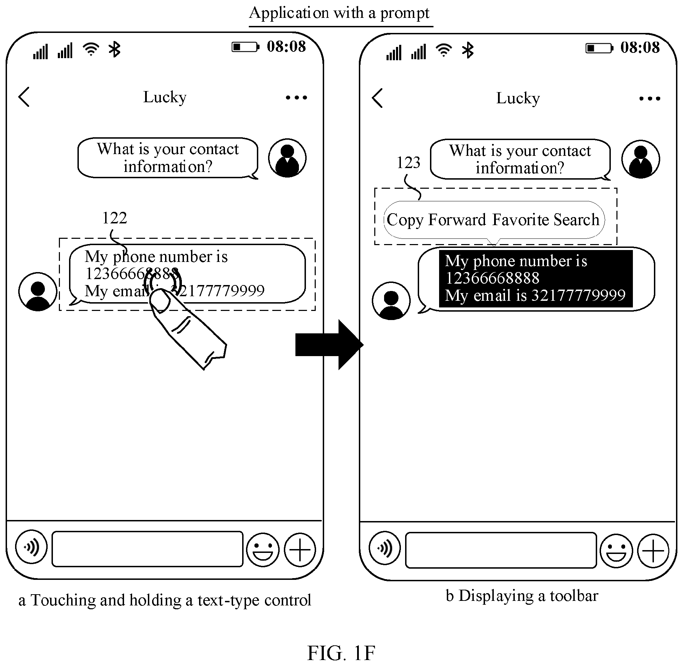

In an interface of an application shown in FIG. 1F, a control 122 included in the interface is a text-type control that only supports "select all". After a user inputs an operation such as a touch and hold operation to the control 122, the application selects whole text in the control 122 by default, and a toolbar 123 used for processing text pops up. The toolbar 123 may include a plurality of tool options, for example, copy, forward, favorite, and search.

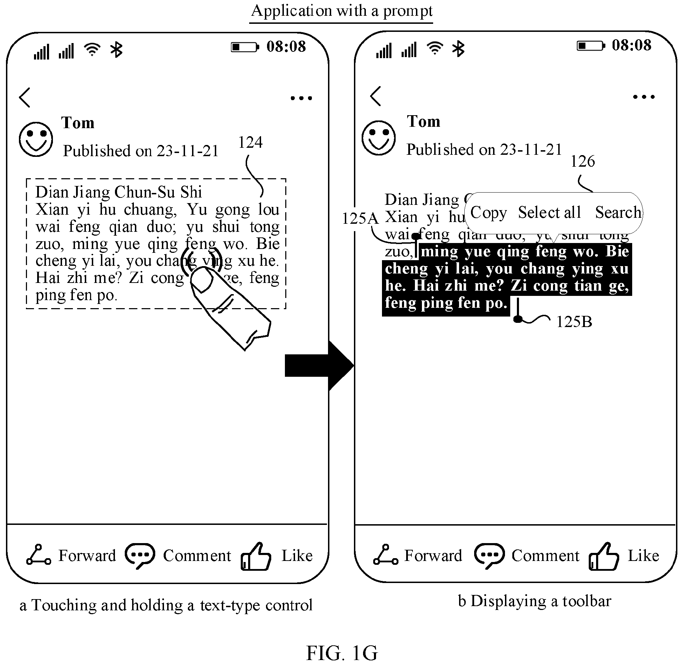

In an interface of an application shown in FIG. 1G, a control 124 included in the interface is a text-type control that supports free selection. After a user inputs an operation such as a touch and hold operation to the control 124, the application displays a cursor 125A and a cursor 125B that are used for sliding to select text, and a toolbar 126 used for processing selected content pops up. The toolbar 126 may include a plurality of tool options, for example, copy, select all, and search.

The foregoing merely exemplarily describes content processing methods respectively provided by several different applications for the applications. Layout conditions of controls in a large quantity of applications are analyzed and control processing manners are provided, to find that controls provided by most applications do not support a user to select content in the controls, and therefore do not support a next step of processing the content. Although controls provided by a small quantity of applications support the user to select content in the controls for further processing, processing manners provided by different applications are not the same.

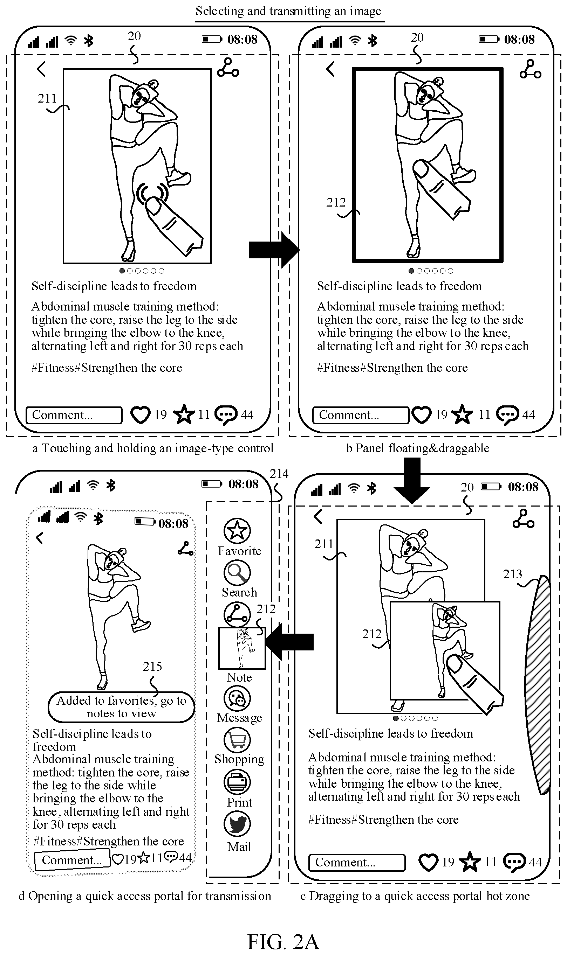

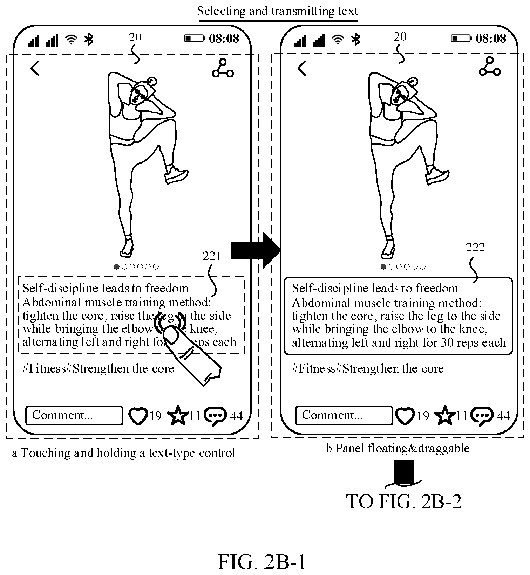

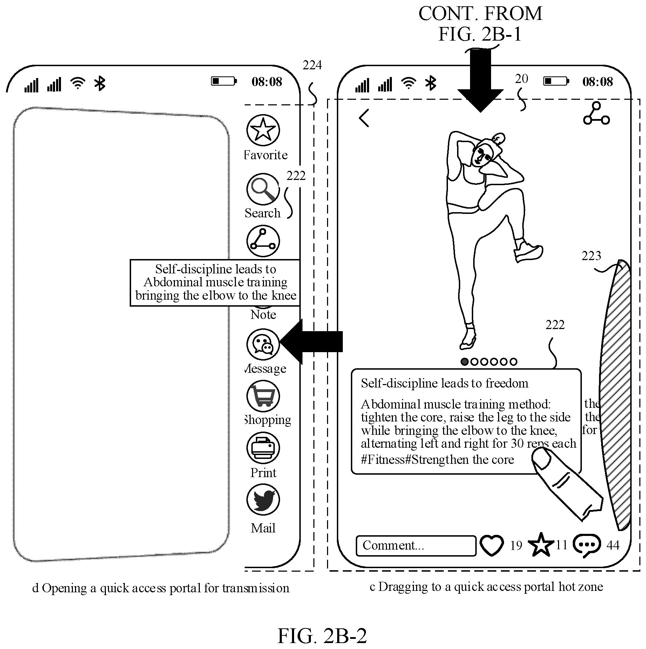

In view of this, this application provides a content processing method. In the content processing method, a user may be supported in selecting content provided by an application, and unified and abundant processing manners may be provided for content in different applications, including but not limited to cross-application transmission, split-screen transmission, cross-device transmission, and the like. In this application, the cross-application transmission is merely used as an example for description. For details, refer to the following descriptions of FIG. 2A, FIG. 2B-1, and FIG. 2B-2.

**FIG. 2A** **is a schematic diagram of a group of operation interfaces of processing an image according to this application.**

a in FIG. 2A shows the interface 20 of an application. The interface 20 includes an image-type control configured to display the image 211.

a and b in FIG. 2A show the operation interfaces of selecting the image. Specifically, an electronic device detects a touch and hold operation on the image 211, and displays a panel 212 that is in a floating state and includes the image 211. The panel 212 in the floating state supports to be dragged by the user.

b and c in FIG. 2A show the operation interfaces of dragging the panel. Specifically, if detecting an operation of dragging the panel 212, the electronic device may change a display area of the panel 212 based on a dragging trajectory. In addition, during dragging of the panel 212, the electronic device further displays a light band 213. The light band 213 indicates the user to drag the panel to a quick access portal hotspot to trigger opening of a quick access portal. In addition, during dragging, a display form (for example, a display size or display content) of the panel 212 may also be changed.

d in FIG. 2A shows the operation interface of transmitting the image through the quick access portal. Specifically, when detecting dragging the panel 212 to the quick access portal hotspot, the electronic device is triggered to open the quick access portal. A menu bar 214 is displayed in the quick access portal, and icons of applications are displayed in the menu bar 214. After detecting an operation of dragging the panel 212 to any icon such as an icon of a notebook application and releasing, the electronic device transmits the image 211 on the panel 212 to the notebook application, and corresponding prompt information 215 pops up.

**FIG. 2B-1** **and** **FIG. 2B-2** **are a schematic diagram of a group of operation interfaces of processing text according to this application.**

a in FIG. 2B-1 shows the interface 20 of an application. The interface 20 includes a text-type control configured to display the text 221.

a and b in FIG. 2B-1 show the operation interfaces of selecting the text. Specifically, an electronic device detects a touch and hold operation on the text 221, and displays a panel 222 that is in a floating state and that includes the text 221. The panel 222 in the floating state supports to be dragged by the user.

b and c in FIG. 2B-1 and FIG. 2B-2 show the operation interfaces of dragging the panel. Specifically, if detecting an operation of dragging the panel 222, the electronic device may change a display area of the panel 222 based on a dragging trajectory. In addition, during dragging of the panel 222, the electronic device further displays a light band 223. The light band 223 indicates the user to drag the panel to a quick access portal hotspot to trigger opening of a quick access portal. In addition, during dragging, a display form (for example, a display size or display content) of the panel 222 may also be changed.

d in FIG. 2B-2 shows the operation interface of transmitting the text on the panel through the quick access portal. Specifically, when detecting dragging the panel 222 to the quick access portal hotspot, the electronic device is triggered to open the quick access portal. A menu bar 224 is displayed in the quick access portal, and icons of applications are displayed in the menu bar 224. After detecting an operation of dragging the panel 222 to any icon such as an icon of a notebook application and releasing, the electronic device transmits the text 221 on the panel 222 to the notebook application, and prompt information 225 pops up.

In this application, the content processing methods shown in FIG. 1A to FIG. 1G are methods provided by the applications for the applications, and are only used for processing content provided by the applications, and content processing methods provided by different applications are different. The content processing methods shown in FIG. 2A, FIG. 2B-1, and FIG. 2B-2 are methods provided by any one of an application, a service, or a component, and may be used to process content provided by the application and another application.

To reserve the content processing method of the application, without affecting the existing content processing method of the application, an extended content processing method is newly added. In other words, to ensure that the two methods can be compatibly implemented by an electronic device, this application provides a content processing method, a graphical interface, and an electronic device.

The content processing method provided in this application includes: The electronic device displays an interface of a first application, where the interface includes first content such as text or an image; receives a touch and hold operation on the first content, and displays, if the touch and hold operation lasts for a first duration, first prompt information provided by the first application, where the first prompt information includes an option for processing the first content; displays, if the touch and hold operation lasts for a second duration, a first panel provided by the second application, where the first panel includes the first content; and shares the first content to a target object if an operation of dragging the first panel to a target area and releasing is received.

Optionally, when the touch and hold operation lasts for the first duration and does not last for the second duration, the electronic device may further display second prompt information provided by a second application. The second prompt information is used for guiding a user not to lift a finger, in other words, to continue input of the touch and hold operation, so as to trigger the electronic device to enable an extended content processing function of the second application. In an implementation, the electronic device displays the second prompt information only when the first content is image-type content. This is because the first prompt information displayed by the first application for the touch and hold operation of the image-type content is usually in a pop-up window, a floating window, or the like, which covers a large area of the first content. Therefore, the second prompt information needs to be used for guiding the user not to lift the finger. In another implementation, regardless of whether the first content is image-type content or text-type content, the electronic device displays the second prompt information. In this way, consistent operation experience may be provided for the user.

Optionally, before the first content on the first panel is shared to the target object, the first content may be further edited, and edited first content is shared to the target object.

The following first describes concepts related to this application.

### Hotspot

The hotspot in this application is an area that is in an interface and that may be used for interaction, and after the interaction, triggers the electronic device to execute a corresponding event. Using an example in which the electronic device is triggered to open a hotspot of a quick access portal (a quick access portal hotspot for short), an interaction manner corresponding to the quick access portal hotspot includes, for example, an operation of dragging a draggable element to the quick access portal hotspot and then releasing the draggable element, and an event triggered by the interaction manner includes, for example, triggering the electronic device to open the quick access portal, in other words, triggering the electronic device to display a menu bar including an application icon. The quick access portal hotspot referred to in this application is merely an exemplary name, a specific name of the area is not limited in this application, and a specific function provided by the area is described in detail in embodiments of this application.

### First application

The first application includes a system application or a third-party application of the electronic device. Particularly, to protect intellectual property of a user and provide immersive game experience for the user, the first application in this application does not include a game application, a document providing application, and the like, and may not include an application of another type if there is another requirement.

### Native content processing function

The "native content processing" function is a content processing function provided by the first application for the first application. The function includes: supporting the user to trigger display of the first prompt information through a touch and hold operation on content in a control, and processing the content in the control by using a processing option in the first prompt information. A name of the function is not limited in embodiments of this application, and a specific effect, namely, implementation of the function, is described in detail in this specification.

### Second application

The second application includes a system application or a third-party application of the electronic device, or may be a service, a component, or the like of the electronic device. The second application is different from the first application.

### Extended content processing function

The "extended content processing" function is a content processing function provided by the second application for the second application and another application. The function includes "content selection" and "content sharing". Content processing methods below are all extended content processing methods. A name of the function is not limited in embodiments of this application, and a specific effect and implementation of the function are described in detail in this specification.

### Content selection

A "content selection" function includes: supporting the user to trigger display of the first panel through a touch and hold operation on a control, and may further trigger display of the second prompt information before the first panel is triggered to be displayed. The "content selection" function further includes: dragging a panel and editing content such as text and an image on the panel. For details, refer to descriptions of UI implementation below, and details are not described herein.

### Content sharing

A "content sharing" function may be specifically provided by a "smart transfer service", a "cross-device transmission service", a "split-screen transmission service", or the like.

The "smart transfer service" may also be referred to as a "cross-application transmission service", and may specifically provide a function of sharing content in an application to another application in a quick access portal.

The "cross-device transmission service" may also be referred to as a "multi-device collaboration service", and may specifically provide a function of sharing content of a device to another device that performs collaborative processing.

The "split-screen transmission service" may also be referred to as a "multi-screen collaboration service", and may specifically provide a function of sharing content of a subscreen to another subscreen that performs collaborative processing.

In embodiments of this application, when the "content sharing" is applied to different scenarios, the "content sharing" may be specifically provided by the foregoing different functional modules. This is not limited in embodiments of this application. Names of the foregoing functions are merely examples, the names are not limited in embodiments of this application, and specific functions provided in embodiments of this application are described in detail in this application.

In embodiments of this application, the "content selection" and the "content sharing" may be provided by two independent functional modules, or may be provided by one functional module formed by coupling two sub-functional modules. This is not limited in embodiments of this application.

### First duration

The first duration in this application includes one or more durations. A specific value of the first duration is not limited in this application, and is specifically determined by content processing logic of an application. Currently, touch and hold durations that are provided by most applications and that are for triggering content processing range from 400 milliseconds to 600 milliseconds.

### Second duration

The second duration in this application includes one or more durations. When the second duration is a fixed duration, the fixed duration is longer than a first duration currently provided by each application, for example, 1100 milliseconds. If the second duration includes a plurality of durations, for applications with different first durations, corresponding second durations are all different, provided that it is ensured that the second duration corresponding to each application is longer than the first duration corresponding to the application.

Next, the content processing method provided in this application is described in detail by using text-type content and image-type content as examples and with reference to several groups of user interfaces provided in the accompanying drawings.

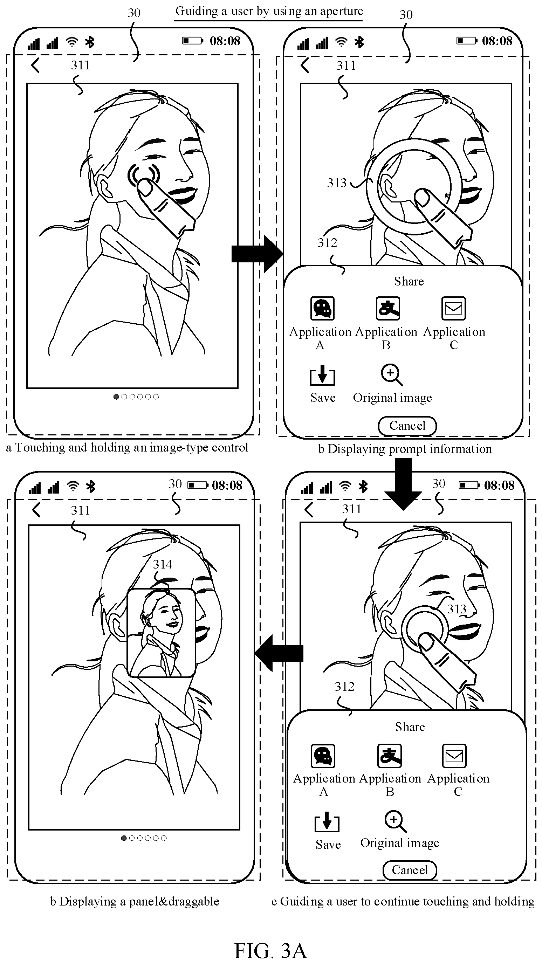

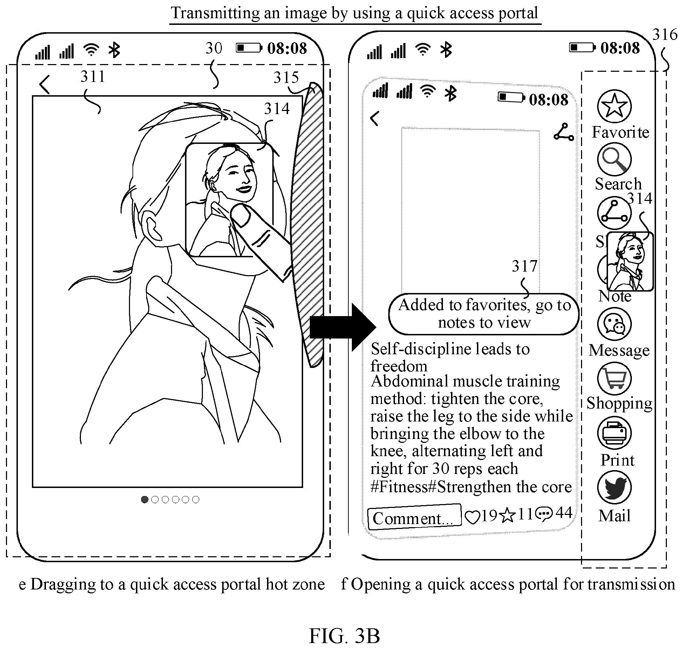

This application provides four processing methods in total. For details, refer to the following detailed descriptions.
**1.** **FIG. 3A** **and** **FIG. 3B** **show operation interfaces in a first content processing method.**

In the content processing method 1, an electronic device may guide, by using a gradually zoomed-out aperture, a user not to lift a finger, in other words, guide the user to continue input of a touch and hold operation on content until the touch and hold operation lasts for a second duration, to trigger display of a panel corresponding to the content.

**FIG. 3A** **is a schematic diagram of a group of operation interfaces of selecting an image according to an embodiment of this application.**

a in FIG. 3A shows the interface 30 of an application. The interface 30 includes the image 311. The image 311 may be displayed by using an image-type control provided by the application. If the electronic device detects that a touch and hold operation on the image 311 lasts for a first duration, in response to the touch and hold operation, the electronic device displays prompt information 312 and prompt information 313, as specifically shown in b in FIG. 3A.

b and c in FIG. 3A show the prompt information displayed by the electronic device. Specifically, in response to the touch and hold operation for the first duration on the image 311, the electronic device displays the prompt information 312 provided by the application and the prompt information 313 provided by a second application.

In some implementations, because some applications do not provide a method for processing content in a control, these applications do not respond to the operation to display the prompt information 312. Further, different applications have different response methods. To be specific, in addition to a pop-up window, the displayed prompt information 312 may be in a toolbar, a floating window, or the like.

In some implementations, the prompt information 313 may have an animated display effect. In an example of an aperture in b and c in FIG. 3A, the aperture may be gradually zoomed-out as a press duration increases, providing the user a sense of focus, to guide the user to continue touching and holding until the second duration is reached and then the aperture disappears.

d in FIG. 3A shows a panel that is displayed by the electronic device and that includes the image. Specifically, if the electronic device detects that the touch and hold operation on the image 311 lasts for the second duration, in response to the touch and hold operation, the electronic device displays the panel 314 that is in a floating state and that includes the image 311. Optionally, during display of the panel 314 by the electronic device, the display may be specifically implemented through a zoom-out animated effect. In addition, the electronic device further supports the user to drag the panel 314 in the floating state, and during dragging, a display form of the panel 314 may also be changed, including changed in a display size, content, and the like.

**FIG. 3B** **is a schematic diagram of a group of operation interfaces of transmitting an image according to an embodiment of this application.**

e in FIG. 3B shows a light band 315 displayed by the electronic device. Specifically, after the electronic device displays the panel 314 in the floating state, as the user drags the panel 314, the electronic device may display the light band 315, and the light band 315 is used for guiding the user to drag the panel 314 to a quick access portal hotspot to trigger opening of a quick access portal (in other words, activate a smart transfer service). The light band 315 may be an interface element with an attribute such as a color, a shadow, a gradient, and graphic filling (such as grid filling and oblique line filling). In some implementations, the light band 315 may be further presented in a dynamic effect, for example, by changing a display area or a color. For example, the display area of the light band may be changed according to a dragging area of the panel 314, providing, for the user, operation experience of attaching to the floating panel 314. In some other implementations, the light band 315 may alternatively be a semi-transparent area. In this way, an interface element displayed under the light band 315 may not be blocked.

f in FIG. 3B shows the operation interface that is displayed on the electronic device and that is of opening the quick access portal for transmission. Specifically, when detecting that the panel 314 is dragged to the light band 315 (or when detecting that the panel 314 is dragged to a second area), the electronic device is triggered to open the quick access portal, and a menu bar 316 including icons of one or more candidate applications is displayed in the quick access portal. The menu bar 316 may include a collection icon, a search icon, a sharing icon, a note icon, an information icon, a shopping icon, a print icon, an email icon, and the like. In addition, when detecting that the user continues to drag the panel 314 to an icon of any candidate application (for example, a note application icon, namely, a target area) in the menu bar 316 and releases the panel 314, the electronic device may confirm that the note application is a target object. Subsequently, the electronic device may transmit text (namely, target text) corresponding to the panel 314 to the note application, and may further output corresponding prompt information 317. In addition to outputting the prompt information 317, in some other implementations, the electronic device may further display a window provided by the target object, or directly jump to an interface provided by the target object.

In an implementation, after the electronic device displays the panel 314 shown in d in FIG. 3A, and before the electronic device detects the operation that is of dragging the panel 314 and that is shown in e in FIG. 3B, the user may directly start to drag, after touching and holding the image 311 to trigger display of the panel 314, the panel 314 without lifting a finger, or the user may lift a finger after touching and holding the image 311 to trigger display of the panel 314, and starts to drag the panel 314 within 3s after lifting the finger. This is not limited in this embodiment of this application. Optionally, a duration for which the panel 314 remains displayed may be another duration in addition to 3s. This is not limited in this embodiment of this application.

Optionally, after the electronic device displays the panel 314, if the electronic device detects an operation of dragging the panel 314 to an area other than an icon of an application in the quick access portal, current image transmission ends. In other words, the electronic device may close the quick access portal and stops displaying the panel 314. In this way, if the user does not want to transmit an image, the user may cancel a current task of image transmission through this operation.

In this embodiment of this application, a custom name in the content processing method 1 may also be referred to as another name. Specifically, the application that provides the interface 30 may also be referred to as a first application. The image 311 may also be referred to as first content, the image-type control configured to display the image 311 may also be referred to as a first control, the prompt information 312 may also be referred to as first prompt information, the prompt information 313 may also be referred to as second prompt information, and the panel 314 may also be referred to as a first panel. The note application may also be referred to as a third application or the target object, and the operation used for dragging the image 311 to the note application icon and releasing may also be referred to as a first operation. An area to which the user drags the panel 314 to trigger opening of the quick access portal may also be referred to as the second area, an area in which the light band 315 is displayed may also be referred to as a third area, and the third area partially or completely overlaps the second area.

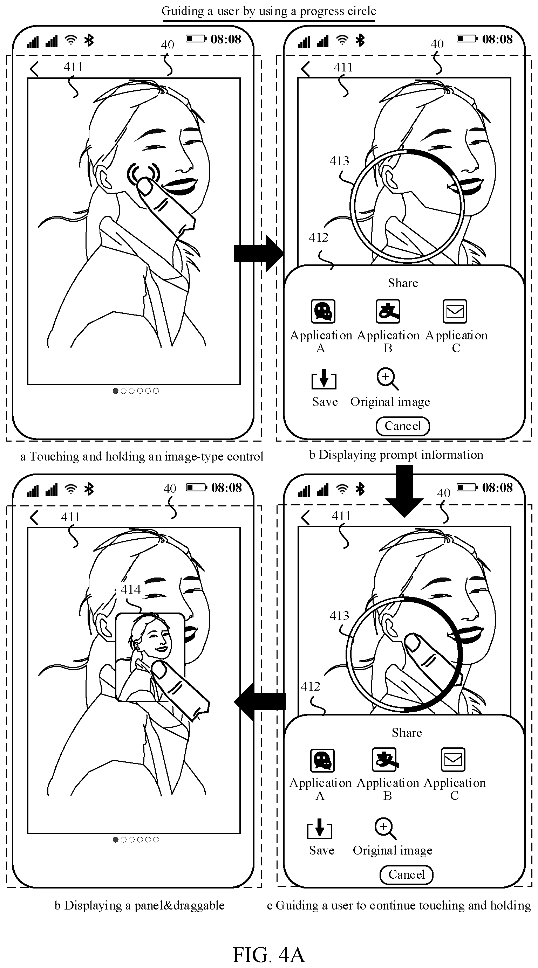

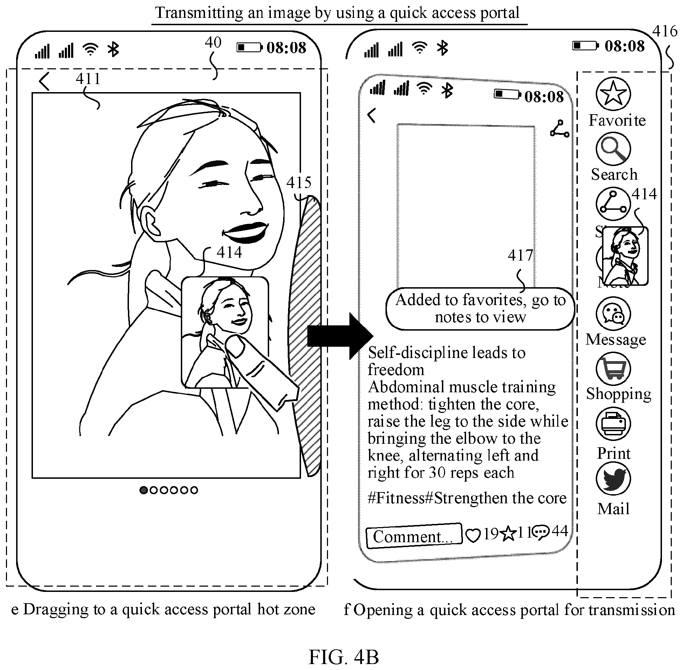

**2.** **FIG. 4A** **and** **FIG. 4B** **show operation interfaces in a second content processing method.**

In the content processing method 2, an electronic device may guide, by using a gradually filled progress circle, a user not to lift a finger, in other words, guide the user to continue input of a touch and hold operation on content until the touch and hold operation lasts for a second duration, to trigger display of a panel corresponding to the content.

**FIG. 4A** **is a schematic diagram of another group of operation interfaces of selecting an image according to an embodiment of this application.**

a in FIG. 4A shows the interface 40 of an application. The interface 40 includes the image 411. The image 411 may be displayed by using an image-type control provided by the application. If the electronic device detects that a touch and hold operation on the image 411 lasts for a first duration, in response to the touch and hold operation, the electronic device displays prompt information 412 and prompt information 413, as specifically shown in b and c in FIG. 4A.

b and c in FIG. 4A show the prompt information displayed by the electronic device. Specifically, in response to the touch and hold operation for the first duration on the image 411, the electronic device displays the prompt information 412 provided by the application and the prompt information 413 provided by a second application.

In some implementations, because some applications do not provide a method for processing content in a control, these applications do not respond to the operation to display the prompt information 412. Further, different applications have different response methods. To be specific, in addition to a pop-up window, the displayed prompt information 412 may be in a toolbar, a floating window, or the like.

In some implementations, the prompt information 413 may have an animated display effect. In an example of a progress circle in b and c in FIG. 4A, the progress circle may be gradually filled up as a press duration increases, providing the user a sense that a touch and hold trigger operation is about to be completed, to guide the user to continue touching and holding until the second duration is reached and then the progress circle is filled up and disappears.

d in FIG. 4A shows a panel that is displayed by the electronic device and that includes the image. Specifically, if the electronic device detects that the touch and hold operation on the image 411 lasts for the second duration, in response to the touch and hold operation, the electronic device displays the panel 414 that is in a floating state and that includes the image 411. Optionally, during display of the panel 414 by the electronic device, the display may be specifically implemented through a zoom-out animated effect. In addition, the electronic device further supports the user to drag the panel 414 in the floating state, and during dragging, a display form of the panel 414 may also be changed, including changed in a display size, content, and the like.

**FIG. 4B** **is a schematic diagram of another group of operation interfaces of transmitting an image according to an embodiment of this application.**

e in FIG. 4B shows a light band 415 displayed by the electronic device. Specifically, after the electronic device displays the panel 414 in the floating state, as the user drags the panel 414, the electronic device may display the light band 415, and the light band 415 is used for guiding the user to drag the panel 414 to a quick access portal hotspot to trigger opening of a quick access portal (in other words, activate a smart transfer service). The light band 415 may be an interface element with an attribute such as a color, a shadow, a gradient, and graphic filling (such as grid filling and oblique line filling). In some implementations, the light band 415 may be further presented in a dynamic effect, for example, by changing a display area or a color. For example, the display area of the light band may be changed according to a dragging area of the panel 414, providing, for the user, operation experience of attaching to the floating panel 414. In some other implementations, the light band 415 may alternatively be a semi-transparent area. In this way, an interface element displayed under the light band 415 may not be blocked.

f in FIG. 4B shows the operation interface that is displayed on the electronic device and that is of opening the quick access portal for transmission. Specifically, when detecting dragging the panel 414 to the light band 415, the electronic device is triggered to open the quick access portal, and a menu bar 416 including icons of one or more candidate applications is displayed in the quick access portal. The menu bar 416 may include a collection icon, a search icon, a sharing icon, a note icon, an information icon, a shopping icon, a print icon, an email icon, and the like. In addition, when detecting that the user continues to drag the panel 414 to an icon of any candidate application (for example, a note application icon, namely, a target area) in the menu bar 416 and releases the panel 414, the electronic device may confirm that the note application is a target object. Subsequently, the electronic device may transmit text (namely, target text) corresponding to the panel 414 to the note application, and may further output corresponding prompt information 417. In addition to outputting the prompt information 417, in some other implementations, the electronic device may further display a window provided by the target object, or directly jump to an interface provided by the target object.

In an implementation, after the electronic device displays the panel 414 shown in d in FIG. 4A, and before the electronic device detects the operation that is of dragging the panel 414 and that is shown in e in FIG. 4B, the user may directly start to drag, after touching and holding the image 411 to trigger display of the panel 414, the panel 414 without lifting a finger, or the user may lift a finger after touching and holding the image 411 to trigger display of the panel 414, and starts to drag the panel 414 within 3s after lifting the finger. This is not limited in this embodiment of this application. Optionally, a duration for which the panel 414 remains displayed may be another duration in addition to 3s. This is not limited in this embodiment of this application.

Optionally, after the electronic device displays the panel 414, if the electronic device detects an operation of dragging the panel 414 to an area other than an icon of an application in the quick access portal, current image transmission ends. In other words, the electronic device may close the quick access portal and stops displaying the panel 414. In this way, if the user does not want to transmit an image, the user may cancel a current task of image transmission through this operation.

In this embodiment of this application, a custom name in the content processing method 2 may also be referred to as another name. Specifically, the application that provides the interface 40 may also be referred to as a first application. The image 411 may also be referred to as first content, the image-type control configured to display the image 411 may also be referred to as a first control, the prompt information 412 may also be referred to as first prompt information, the prompt information 413 may also be referred to as second prompt information, and the panel 414 may also be referred to as a first panel. The note application may also be referred to as a third application or the target object, and the operation used for dragging the image 411 to the note application icon and releasing may also be referred to as a first operation. An area to which the user drags the panel 414 to trigger opening of the quick access portal may also be referred to as the second area, an area in which the light band 415 is displayed may also be referred to as a third area, and the third area partially or completely overlaps the second area.

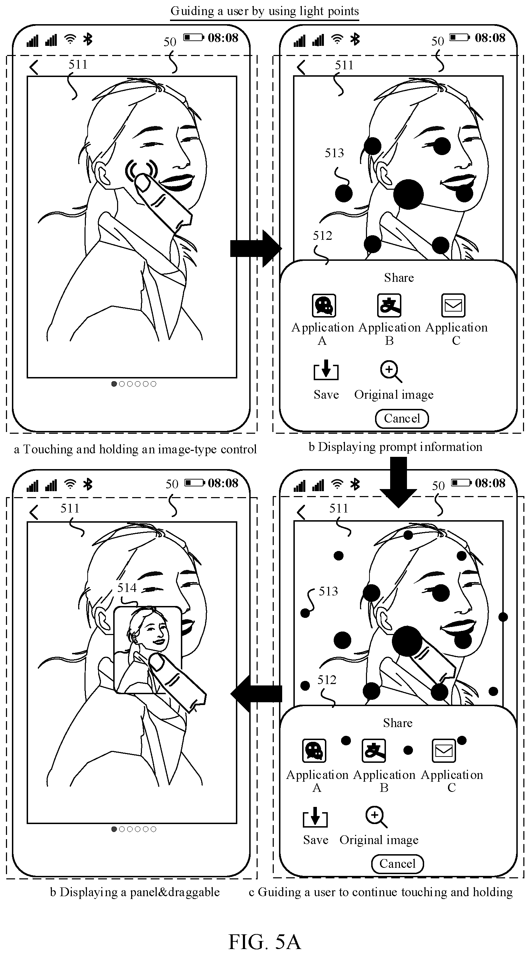

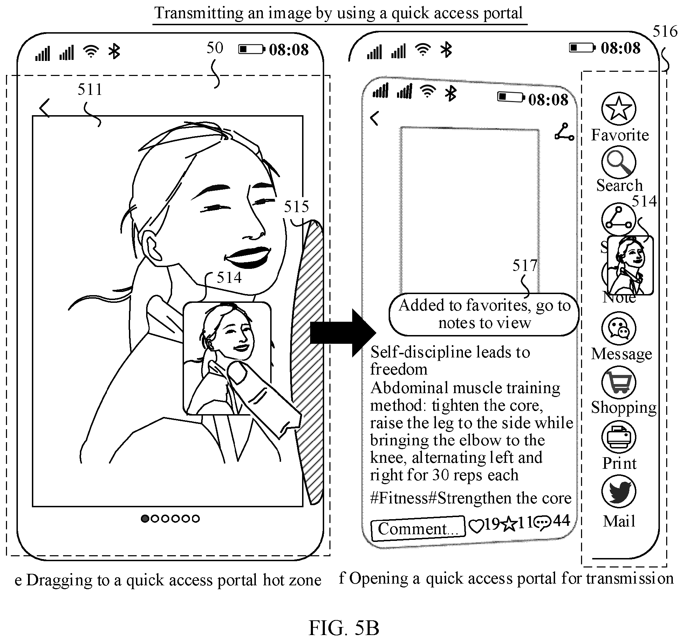

**3.** **FIG. 5A** **and** **FIG. 5B** **show operation interfaces in a third content processing method.**

In the content processing method 3, an electronic device may guide, by using an animated effect of gradually diffused light points, a user not to lift a finger, in other words, guide the user to continue input of a touch and hold operation on content until the touch and hold operation lasts for a second duration, to trigger display of a panel corresponding to the content.

**FIG. 5A** **is a schematic diagram of another group of operation interfaces of selecting an image according to an embodiment of this application.**

a in FIG. 5A shows the interface 50 of an application. The interface 50 includes the image 511. The image 511 may be displayed by using an image-type control provided by the application. If the electronic device detects that a touch and hold operation on the image 511 lasts for a first duration, in response to the touch and hold operation, the electronic device displays prompt information 512 and prompt information 513, as specifically shown in b and c in FIG. 5A.

b and c in FIG. 5A show the prompt information displayed by the electronic device. Specifically, in response to the touch and hold operation for the first duration on the image 511, the electronic device displays the prompt information 512 provided by the application and the prompt information 513 provided by a second application.

In some implementations, because some applications do not provide a method for processing content in a control, these applications do not respond to the operation to display the prompt information 512. Further, different applications have different response methods. To be specific, in addition to a pop-up window, the displayed prompt information 512 may be in a toolbar, a floating window, or the like.

In some implementations, the prompt information 513 may have an animated display effect. In an example of an animated effect of light points in b and c in FIG. 5A, the animated effect of light points may be gradually diffused as a press duration increases, to guide the user to continue touching and holding until the second duration is reached and the progress circle is filled up and disappears.

d in FIG. 5A shows a panel that is displayed by the electronic device and that includes the image. Specifically, if the electronic device detects that the touch and hold operation on the image 511 lasts for the second duration, in response to the touch and hold operation, the electronic device displays the panel 514 that is in a floating state and that includes the image 511. Optionally, during display of the panel 514 by the electronic device, the display may be specifically implemented through a zoom-out animated effect. In addition, the electronic device further supports the user to drag the panel 514 in the floating state, and during dragging, a display form of the panel 514 may also be changed, including changed in a display size, content, and the like.

**FIG. 5B** **is a schematic diagram of another group of operation interfaces of transmitting an image according to an embodiment of this application.**

e in FIG. 5B shows a light band 515 displayed by the electronic device. Specifically, after the electronic device displays the panel 514 in the floating state, as the user drags the panel 514, the electronic device may display the light band 515, and the light band 515 is used for guiding the user to drag the panel 514 to a quick access portal hotspot to trigger opening of a quick access portal (in other words, activate a smart transfer service). The light band 515 may be an interface element with an attribute such as a color, a shadow, a gradient, and graphic filling (such as grid filling and oblique line filling). In some implementations, the light band 515 may be further presented in a dynamic effect, for example, by changing a display area or a color. For example, the display area of the light band may be changed according to a dragging area of the panel 514, providing, for the user, operation experience of attaching to the floating panel 514. In some other implementations, the light band 515 may alternatively be a semi-transparent area. In this way, an interface element displayed under the light band 515 may not be blocked.

f in FIG. 5B shows the operation interface that is displayed on the electronic device and that is of opening the quick access portal for transmission. Specifically, when detecting dragging the panel 514 to the light band 515, the electronic device is triggered to open the quick access portal, and a menu bar 516 including icons of one or more candidate applications is displayed in the quick access portal. The menu bar 516 may include a collection icon, a search icon, a sharing icon, a note icon, an information icon, a shopping icon, a print icon, an email icon, and the like. In addition, when detecting that the user continues to drag the panel 514 to an icon of any candidate application (for example, a note application icon, namely, a target area) in the menu bar 516 and releases the panel 514, the electronic device may confirm that the note application is a target object. Subsequently, the electronic device may transmit text (namely, target text) corresponding to the panel 514 to the note application, and may further output corresponding prompt information 517. In addition to outputting the prompt information 517, in some other implementations, the electronic device may further display a window provided by the target object, or directly jump to an interface provided by the target object.

In an implementation, after the electronic device displays the panel 514 shown in d in FIG. 5A, and before the electronic device detects the operation that is of dragging the panel 514 and that is shown in e in FIG. 5B, the user may directly start to drag, after touching and holding the image 511 to trigger display of the panel 514, the panel 514 without lifting a finger, or the user may lift a finger after touching and holding the image 511 to trigger display of the panel 514, and starts to drag the panel 514 within 3s after lifting the finger. This is not limited in this embodiment of this application. Optionally, a duration for which the panel 514 remains displayed may be another duration in addition to 3s. This is not limited in this embodiment of this application.

Optionally, after the electronic device displays the panel 514, if the electronic device detects an operation of dragging the panel 514 to an area other than an icon of an application in the quick access portal, current image transmission ends. In other words, the electronic device may close the quick access portal and stops displaying the panel 514. In this way, if the user does not want to transmit an image, the user may cancel a current task of image transmission through this operation.

In this embodiment of this application, a custom name in the content processing method 3 may also be referred to as another name. Specifically, the application that provides the interface 50 may also be referred to as a first application. The image 511 may also be referred to as first content, the image-type control configured to display the image 511 may also be referred to as a first control, the prompt information 512 may also be referred to as first prompt information, the prompt information 513 may also be referred to as second prompt information, and the panel 514 may also be referred to as a first panel. The note application may also be referred to as the target object, and the operation used for dragging the image 511 to the note application icon and releasing may also be referred to as a first operation. An area to which the user drags the panel 514 to trigger opening of the quick access portal may also be referred to as the second area, an area in which the light band 515 is displayed may also be referred to as a third area, and the third area partially or completely overlaps the second area.

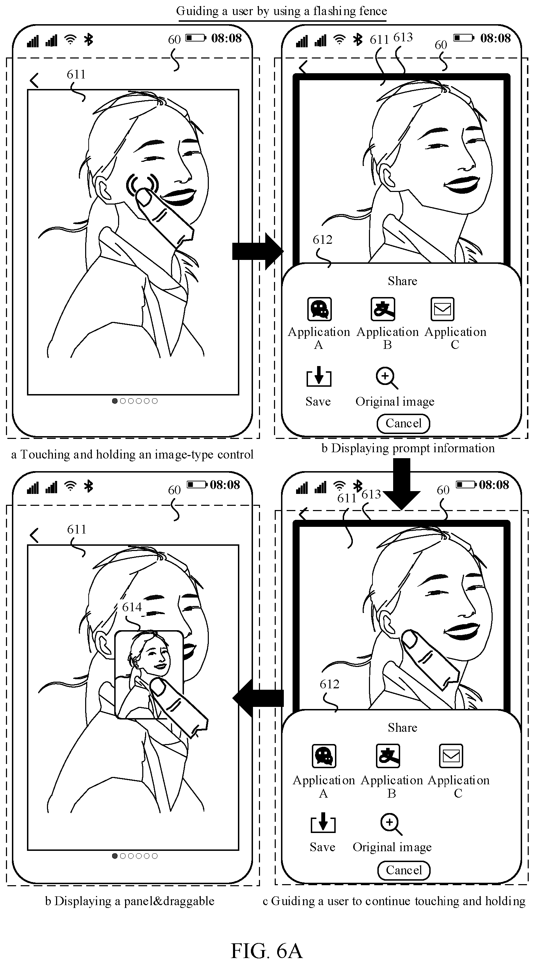

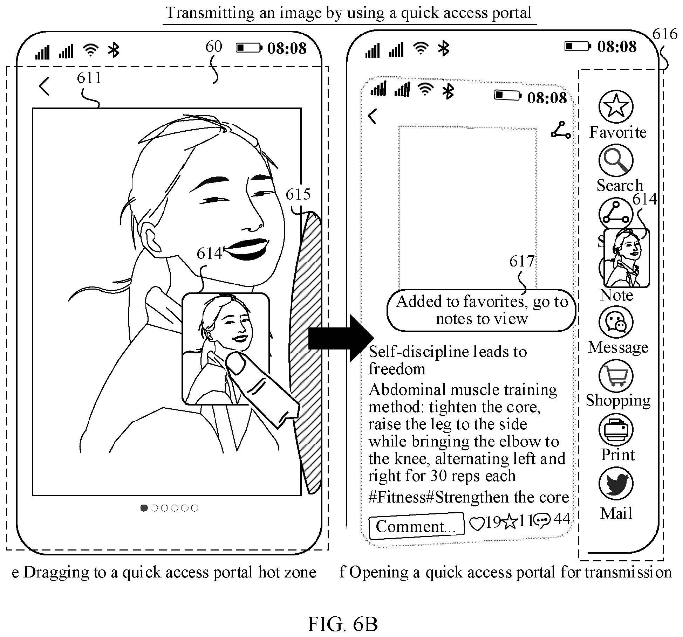

**4.** **FIG. 6A** **and** **FIG. 6B** **show operation interfaces in a third content processing method.**

In the content processing method 4, an electronic device may guide, by using an animated effect of a flashing fence, a user not to lift a finger, in other words, guide the user to continue input of a touch and hold operation on content until the touch and hold operation reaches a second duration, to trigger display of a panel corresponding to the content.

**FIG. 6A** **is a schematic diagram of another group of operation interfaces of selecting an image according to an embodiment of this application.**

a in FIG. 6A shows the interface 60 of an application. The interface 60 includes the image 611. The image 611 may be displayed by using an image-type control provided by the application. If the electronic device detects that a touch and hold operation on the image 611 lasts for a first duration, in response to the touch and hold operation, the electronic device displays prompt information 612 and prompt information 613, as specifically shown in b and c in FIG. 6A.

b and c in FIG. 6A show the prompt information displayed by the electronic device. Specifically, in response to the touch and hold operation for the first duration on the image 611, the electronic device displays the prompt information 612 provided by the application and the prompt information 613 provided by a second application.

In some implementations, because some applications do not provide a method for processing content in a control, these applications do not respond to the operation to display the prompt information 612. Further, different applications have different response methods. To be specific, in addition to a pop-up window, the displayed prompt information 612 may be in a toolbar, a floating window, or the like.

In some implementations, the prompt information 613 may have an animated display effect. In an example of a fence surrounding the image 611 in b and c in FIG. 6A, the fence may keep flashing as a press duration increases, to guide the user to continue touching and holding until the second duration is reached and the progress circle is filled up and disappears.

d in FIG. 6A shows a panel that is displayed by the electronic device and that includes the image. Specifically, if the electronic device detects that the touch and hold operation on the image 611 lasts for the second duration, in response to the touch and hold operation, the electronic device displays the panel 614 that is in a floating state and that includes the image 611. Optionally, during display of the panel 614 by the electronic device, the display may be specifically implemented through a zoom-out animated effect. In addition, the electronic device further supports the user to drag the panel 614 in the floating state, and during dragging, a display form of the panel 614 may also be changed, including changed in a display size, content, and the like.

**FIG. 6B** **is a schematic diagram of another group of operation interfaces of transmitting an image according to an embodiment of this application.**

e in FIG. 6B shows a light band 615 displayed by the electronic device. Specifically, after the electronic device displays the panel 614 in the floating state, as the user drags the panel 614, the electronic device may display the light band 615, and the light band 615 is used for guiding the user to drag the panel 614 to a quick access portal hotspot to trigger opening of a quick access portal (in other words, activate a smart transfer service). The light band 615 may be an interface element with an attribute such as a color, a shadow, a gradient, and graphic filling (such as grid filling and oblique line filling). In some implementations, the light band 615 may be further presented in a dynamic effect, for example, by changing a display area or a color. For example, the display area of the light band may be changed according to a dragging area of the panel 614, providing, for the user, operation experience of attaching to the floating panel 614. In some other implementations, the light band 615 may alternatively be a semi-transparent area. In this way, an interface element displayed under the light band 615 may not be blocked.

f in FIG. 6B shows the operation interface that is displayed on the electronic device and that is of opening the quick access portal for transmission. Specifically, when detecting dragging the panel 614 to the light band 615, the electronic device is triggered to open the quick access portal, and a menu bar 616 including icons of one or more candidate applications is displayed in the quick access portal. The menu bar 616 may include a collection icon, a search icon, a sharing icon, a note icon, an information icon, a shopping icon, a print icon, an email icon, and the like. In addition, when detecting that the user continues to drag the panel 614 to an icon of any candidate application (for example, a note application icon, namely, a target area) in the menu bar 616 and releases the panel 614, the electronic device may confirm that the note application is a target object. Subsequently, the electronic device may transmit text (namely, target text) corresponding to the panel 614 to the note application, and may further output corresponding prompt information 617. In addition to outputting the prompt information 617, in some other implementations, the electronic device may further display a window provided by the target object, or directly jump to an interface provided by the target object.

In an implementation, after the electronic device displays the panel 614 shown in d in FIG. 6A, and before the electronic device detects the operation that is of dragging the panel 614 and that is shown in e in FIG. 6B, the user may directly start to drag, after touching and holding the image 611 to trigger display of the panel 614, the panel 614 without lifting a finger, or the user may lift a finger after touching and holding the image 611 to trigger display of the panel 614, and starts to drag the panel 614 within 3s after lifting the finger. This is not limited in this embodiment of this application. Optionally, a duration for which the panel 614 remains displayed may be another duration in addition to 3s. This is not limited in this embodiment of this application.

Optionally, after the electronic device displays the panel 614, if the electronic device detects an operation of dragging the panel 614 to an area other than an icon of an application in the quick access portal, current image transmission ends. In other words, the electronic device may close the quick access portal and stops displaying the panel 614. In this way, if the user does not want to transmit an image, the user may cancel a current task of image transmission through this operation.

In this embodiment of this application, a custom name in the content processing method 4 may also be referred to as another name. Specifically, the application that provides the interface 60 may also be referred to as a first application. The image 611 may also be referred to as first content, the image-type control configured to display the image 611 may also be referred to as a first control, the prompt information 612 may also be referred to as first prompt information, the prompt information 613 may also be referred to as second prompt information, and the panel 614 may also be referred to as a first panel. The note application may also be referred to as the target object, and the operation used for dragging the image 611 to the note application icon and releasing may also be referred to as a first operation. An area to which the user drags the panel 614 to trigger opening of the quick access portal may also be referred to as the second area, an area in which the light band 615 is displayed may also be referred to as a third area, and the third area partially or completely overlaps the second area.

The foregoing describes the operation interfaces related to the image-type content by using only the image-type content as an example. A text-type content processing method provided in this application is similar to the foregoing image-type processing methods. Next, only the first image-type processing method described in FIG. 3A and FIG. 3B is used as an example to describe a processing method corresponding to text-type content. For other specific content processing methods, refer to the several processing methods shown in FIG. 4A to FIG. 6B, and details are not described herein.

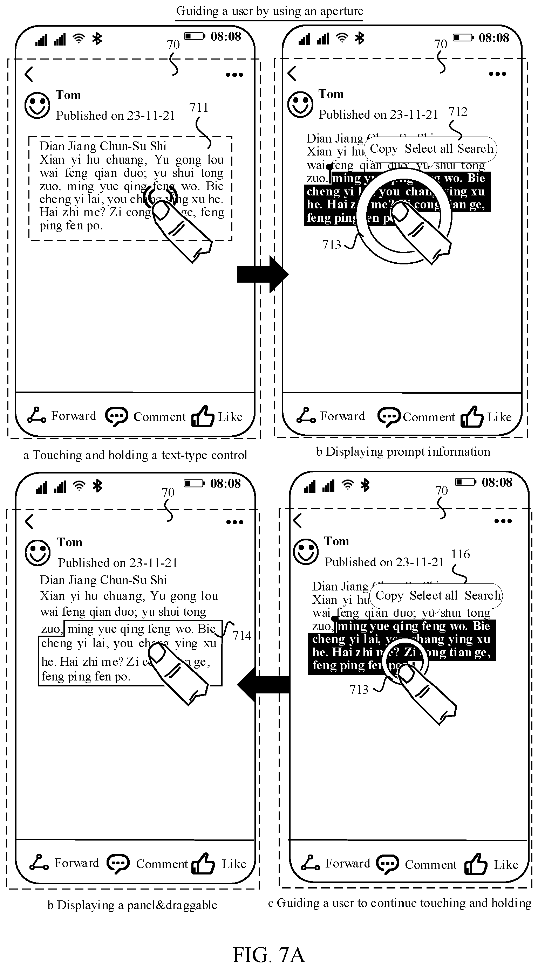

**FIG. 7A** **is a schematic diagram of a group of operation interfaces for selecting text according to an embodiment of this application.**

a in FIG. 7A shows the interface 70 of an application. The interface 70 includes text 711. The text 711 may be displayed by using a text-type control provided by the application. If the electronic device detects that a touch and hold operation on the text 711 lasts for a first duration, in response to the touch and hold operation, the electronic device displays prompt information 712 and prompt information 713, as specifically shown in b in FIG. 7A.

b and c in FIG. 7A show the prompt information displayed by the electronic device. Specifically, in response to the touch and hold operation for the first duration on the text 711, the electronic device displays the prompt information 712 provided by the application and the prompt information 713 provided by a second application.

In some implementations, because some applications do not provide a method for processing content in a control, these applications do not respond to the operation to display the prompt information 712. Further, different applications have different response methods. To be specific, in addition to a toolbar, the displayed prompt information 712 may be in a pop-up window, a floating window, or the like.

In some implementations, the prompt information 713 may have an animated display effect. In an example of an aperture in b and c in FIG. 7A, the aperture may be gradually zoomed-out as a press duration increases, providing the user a sense of focus, to guide the user to continue touching and holding until the second duration is reached and then the aperture disappears.

d in FIG. 7A shows a panel that is displayed by the electronic device and that includes the text. Specifically, if the electronic device detects that the touch and hold operation on the text 711 lasts for the second duration, in response to the touch and hold operation, the electronic device displays the panel 714 that is in a floating state and that includes the text 711. Optionally, during display of the panel 714 by the electronic device, the display may be specifically implemented through a zoom-out animated effect. In addition, the electronic device further supports the user to drag the panel 714 in the floating state, and during dragging, a display form of the panel 714 may also be changed, including changed in a display size, content, and the like.

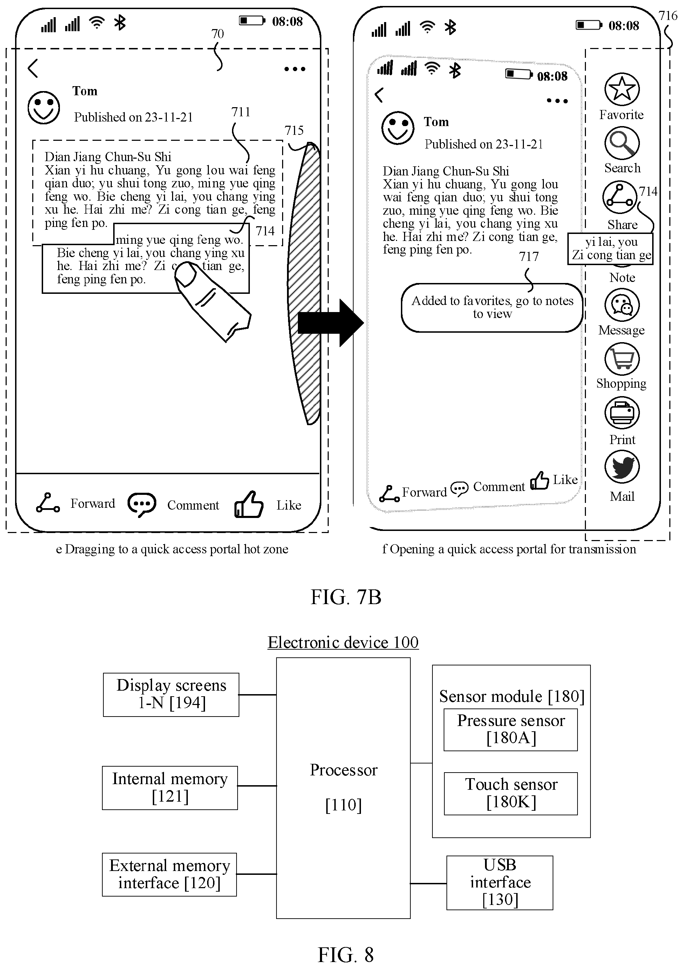

**FIG. 7B** **is a schematic diagram of another group of operation interfaces for transmitting selected text according to an embodiment of this application.**

e in FIG. 7B shows a light band 715 displayed by the electronic device. Specifically, after the electronic device displays the panel 714 in the floating state, as the user drags the panel 714, the electronic device may display the light band 715, and the light band 715 is used for guiding the user to drag the panel 714 to a quick access portal hotspot to trigger opening of a quick access portal (in other words, activate a smart transfer service). The light band 715 may be an interface element with an attribute such as a color, a shadow, a gradient, and graphic filling (such as grid filling and oblique line filling). In some implementations, the light band 715 may be further presented in a dynamic effect, for example, by changing a display area or a color. For example, the display area of the light band may be changed according to a dragging area of the panel 714, providing, for the user, operation experience of attaching to the floating panel 714. In some other implementations, the light band 715 may alternatively be a semi-transparent area. In this way, an interface element displayed under the light band 715 may not be blocked.

f in FIG. 7B shows the operation interface that is displayed on the electronic device and that is of opening the quick access portal for transmission. Specifically, when detecting dragging the panel 714 to the light band 715, the electronic device is triggered to open the quick access portal, and a menu bar 716 including icons of one or more candidate applications is displayed in the quick access portal. The menu bar 716 may include a collection icon, a search icon, a sharing icon, a note icon, an information icon, a shopping icon, a print icon, an email icon, and the like. In addition, when detecting that the user continues to drag the panel 714 to an icon of any candidate application (for example, a note application icon, namely, a target area) in the menu bar 716 and releases the panel 714, the electronic device may confirm that the note application is a target object. Subsequently, the electronic device may transmit text (namely, target text) corresponding to the panel 714 to the note application, and may further output corresponding prompt information 717. In addition to outputting the prompt information 717, in some other implementations, the electronic device may further display a window provided by the target object, or directly jump to an interface provided by the target object.

In an implementation, after the electronic device displays the panel 714 shown in d in FIG. 7A, and before the electronic device detects the operation that is of dragging the panel 714 and that is shown in e in FIG. 7B, the user may directly start to drag, after touching and holding the text 711 to trigger display of the panel 714, the panel 714 without lifting a finger, or the user may lift a finger after touching and holding the text 711 to trigger display of the panel 714, and starts to drag the panel 714 within 3s after lifting the finger. This is not limited in this embodiment of this application. Optionally, a duration for which the panel 714 remains displayed may be another duration in addition to 3s. This is not limited in this embodiment of this application.

Optionally, after the electronic device displays the panel 714, if the electronic device detects an operation of dragging the panel 714 to an area other than an icon of an application in the quick access portal, current text transmission ends. In other words, the electronic device may close the quick access portal and stops displaying the panel 714. In this way, if the user does not want to transmit text, the user may cancel a current task of text transmission through this operation.

In this embodiment of this application, a custom name in the content processing method 4 may also be referred to as another name. Specifically, the application that provides the interface 70 may also be referred to as a first application. The text 711 may also be referred to as first content, the image-type control configured to display the text 711 may also be referred to as a first control, the prompt information 712 may also be referred to as first prompt information, the prompt information 713 may also be referred to as second prompt information, and the panel 714 may also be referred to as a first panel. The note application may also be referred to as the target object, and the operation used for dragging the text 711 to the note application icon and releasing may also be referred to as a first operation. An area to which the user drags the panel 714 to trigger opening of the quick access portal may also be referred to as the second area, an area in which the light band 715 is displayed may also be referred to as a third area, and the third area partially or completely overlaps the second area.

### Editing content in a panel

In the foregoing UI embodiments of FIG. 3A to FIG. 7B, after the electronic device is triggered to display the panel corresponding to the image and the text, only an example of dragging the panel to the target area and releasing the panel to share the content on the panel is directly used. In addition, the electronic device may further trigger display of an editing tool through a second operation on the panel after the panel floats and before the content of the panel is dragged and shared, so that the content on the panel is freely edited (the content before being edited may also be referred to as the first content, edited content may also be referred to as second content) by using the editing tool, and then the edited content is dragged to the target area for sharing.

A method for editing the content on the panel includes but is not limited to any one or more of the following:
(1) The panel is dragged to an editing area first, and then an operation such as deleting, selecting, or adding the text on the panel is input; or an operation such as graffiti or cropping is performed on the image on the panel. Specifically, in an example of FIG. 3A and FIG. 3B, after displaying the panel 314 shown in c in FIG. 3A, the electronic device may further display an editing icon on an upper layer of the interface 30. The editing icon indicates the user to continue dragging the panel 314 to a hotspot of the editing icon to edit the image 311.
(2) An operation such as deleting, selecting, or adding is directly performed on the text on the panel; or an operation such as graffiti or cropping is directly performed on the image on the panel. Specifically, in an example of FIG. 3A and FIG. 3B, after displaying the panel 314 shown in c in FIG. 3A, the electronic device may further detect an operation on the panel 314, to edit the image 311 on the panel 314.

### Other content sharing manners

FIG. 3B, FIG. 4B, FIG. 5B, FIG. 6B, and FIG. 7B describe, by using only a manner of using the "smart transfer service" as an example, an operation method for transmitting the content such as the image or the text. In addition, the electronic device may further transmit the selected text in a manner such as a "cross-device transmission service" or a "split-screen transmission service". Operation methods corresponding to the latter two manners are similar to the operation methods described above, and differences lie in that, the panel corresponding to the image and the text needs to be dragged to a target area different from the foregoing light band, and a sharing target object is also different. Specifically, in an example of the "cross-device transmission service", the target area may alternatively be an edge area of a local electronic device (where the edge area includes, for example, an area such as a left side edge, a right side edge, an upper side edge, or a lower side edge of a display screen of the local device, a specific edge area depends on a side that a neighboring device approaches to the local device, and the edge area may also be referred to as a fourth area), and the target object is a neighboring device that performs collaborative processing. In an example of the "split-screen transmission service", the target area may be another split-screen area of the electronic device, and the target object is an object in the another split-screen area.

### Other rules for guiding the user to continue touching and holding

In the foregoing UI embodiments of FIG. 3A to FIG. 7B, regardless of the image-type content or the text-type content, when detecting a touch and hold operation for the first duration on the type of content, the electronic device displays extended prompt information used for guiding the user to continue touching and holding. In addition, this application may further use the following rules to display, in some cases, the extended prompt information used for guiding the user to continue touching and holding, and not to display, in other cases, the extended prompt information used for guiding the user to continue touching and holding.
(1) In an implementation, for the image-type content, the user needs to be guided, through the second prompt information shown in FIG. 3A to FIG. 6B, to continue input of the touch and hold operation, to trigger display of the panel including the image, and then a subsequent content processing method is performed. For the text-type content, the second prompt information shown in FIG. 3A to FIG. 6B does not need to be provided. This is because, for image-type content provided by most applications currently, manners that are for processing native content and that are provided by the applications include: displaying a corresponding pop-up window, floating window, mask layer, or the like in response to a touch and hold operation on an image. The prompt information blocks a large area of the image, and in this case, the user may mistakenly determine that a current press operation should be ended. For text-type content provided by most current applications, manners that are for processing native content and that are provided by the applications include: displaying a corresponding toolbar and the like in response to a touch and hold operation on text. The prompt information does not block a large area of the text, and usually, the user is not mislead to determine that input of a press operation cannot be continued. Therefore, in the extended content processing method provided in this application, to ensure that the user can learn of and use an extended content processing function provided in this application, extended prompt information is provided only for the image-type content.
(2) In another implementation, division may be performed based on native prompt information corresponding to content. When an area covered by the native prompt information on the content exceeds a preset value (for example, 70%), the second prompt information (namely, the extended prompt information) shown in FIG. 3A to FIG. 6B is displayed. When the area covered by the native prompt information on the content does not exceed a threshold, the extended prompt information is not displayed. In this way, it can be effectively ensured that the user learns of an extended content processing function provided in this application, and the user can be guided to successfully use the extended content processing function provided in this application, to ensure effectiveness of the extended content processing function.

### Other forms for guiding the user to continue touching and holding

In the foregoing UI embodiments of FIG. 3A to FIG. 7B, only four types of prompt information for guiding the user to continue touching and holding are used as examples for description. In addition, this application may further provide guidance information in other forms, such as a text prompt, a voice prompt, a vibration prompt, and a breathing light prompt. This is not limited in embodiments of this application.

In conclusion, it can be learned that, after implementing the method provided in this application, the following beneficial effects are achieved:
(1) A content processing method of an application is reserved, and the extended content processing method provided in this application is compatibly implemented while having no impact on the existing content processing method of the application.
(2) A unified content processing method is provided for the user. Specifically, because different applications provide different content processing methods, when the user performs unified processing on different applications, the method provided in this application may be used.
(3) The method is adapted to a wide range of application scenarios including but not limited to cross-application transmission, split-screen transmission, cross-device transmission, and the like.
(4) A more convenient and free content selection method and a more convenient and abundant content sharing method are provided for the user.

Based on the foregoing descriptions of the UI embodiments of the content processing method provided in this application, the following describes a form of a related electronic device and a software and hardware architecture thereof.

The electronic device may be a portable terminal device carrying iOS^{®}, Android^{®}, Microsoft^{®}, or another operating system, for example, a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, or a smart household device and/or a smart city device.

FIG. 8 is a schematic diagram of a structure of an electronic device 100.

The electronic device 100 may include a processor 110, an external memory interface 120, an internal memory 121, a universal serial bus (universal serial bus, USB) interface 130, a sensor module 180, a display screen 194, and the like. The sensor module 180 may include a pressure sensor 180A, a touch sensor 180K, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or a different component arrangement may be used. Components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), and the like. Different processing units may be separate devices, or may be integrated into one or more processors.

The controller may be a nerve center and a command center of the electronic device 100. The controller may generate an operation control signal based on instruction operation code and a timing signal, to complete control of instruction fetching and instruction execution.

A memory may be further disposed in the processor 110 and is configured to store instructions and data. In some embodiments, the memory in the processor 110 is a cache. The memory may store instructions or data recently used or cyclically used by the processor 110. If the processor 110 needs to use the instructions or the data again, the processor may directly invoke the instructions or the data from the memory. Repeated access is avoided, and waiting time of the processor 110 is reduced, so that efficiency of the system is improved.

In this embodiment of this application, the processor 110 is configured to cooperate with the display screen 194, the touch sensor 180K, and the like, to implement the foregoing content processing method.

In some embodiments, the processor 110 may include one or more interfaces. The interface may include a universal serial bus (universal serial bus, USB) interface and the like.

The USB interface 130 is an interface that conforms to a USB standard specification, and may be specifically a mini USB interface, a micro USB interface, a USB type-C interface, or the like. The USB interface 130 may be configured to be connected to the charger to charge the electronic device 100, or may be configured to transmit data between the electronic device 100 and a peripheral device, or may be configured to be connected to a headset to play audio through the headset. The interface may alternatively be configured to connect to another electronic device, for example, an AR device.

It may be understood that a schematic interface connection relationship between the modules in embodiments of this application is merely an example for description, and constitutes no limitation on the structure of the electronic device 100. In some other embodiments of this application, the electronic device 100 may use an interface connection manner different from that in the foregoing embodiments, or use combinations of a plurality of interface connection manners.

The electronic device 100 implements a display function by using the GPU, the display screen 194, the application processor, and the like. The GPU is an image processing microprocessor and is connected to the display screen 194 and the application processor. The GPU is configured to perform mathematical and geometric calculations for graphics rendering. The processor 110 may include one or more GPUs that execute program instructions to generate or change display information.

The display screen 194 is configured to display an image, a video, or the like. The display screen 194 includes a display panel. The display panel may be a liquid crystal display (liquid crystal display, LCD). The display panel may alternatively be an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 100 may include one or N display screens 194, where N is a positive integer greater than 1.

In this embodiment of this application, the electronic device may control, based on a detected operation, the display screen 194 to output corresponding feedback information, specifically output interfaces that include but are not limited to interfaces shown in FIG. 1A to FIG. 7B.

The internal memory 121 may include one or more random access memories (random access memory, RAM), and one or more non-volatile memories (non-volatile memory, NVM).

The external memory interface 120 may be configured to connect to an external non-volatile memory, to expand a storage capability of the electronic device 100. The external non-volatile memory communicates with the processor 110 through the external memory interface 120, to implement a data storage function. For example, a file such as music or a video is stored in the external non-volatile memory.

The pressure sensor 180A is configured to sense a pressure signal, and may convert the pressure signal to an electrical signal. In some embodiments, the pressure sensor 180A may be disposed on the display screen 194. There are many types of pressure sensors 180A, such as a resistive pressure sensor, an inductive pressure sensor, and a capacitive pressure sensor. The capacitive pressure sensor may include at least two parallel plates having conductive materials. When a force is applied to the pressure sensor 180A, capacitance between electrodes changes. The electronic device 100 determines strength of the pressure based on the change of the capacitance. When a touch operation is performed on the display screen 194, the electronic device 100 measures strength of the touch operation based on the pressure sensor 180A. The electronic device 100 may further calculate a touch position based on a detection signal of the pressure sensor 180A. In some embodiments, touch operations performed on a same touch position but with different touch operation strength may correspond to different operation instructions. For example, when a touch operation having touch operation strength that is less than a first pressure threshold is performed on a short message application icon, an instruction of checking a short message is executed. When a touch operation having touch operation strength that is greater than or equal to the first pressure threshold is performed on the short message application icon, an instruction of creating a short message is executed.

In this embodiment of this application, the pressure sensor 180A may be configured to detect various touch and press operations in FIG. 1A to FIG. 7B.

The touch sensor 180K is also referred to as a "touch panel". The touch sensor 180K may be disposed on the display screen 194. The touch sensor 180K and the display screen 194 form a touchscreen, also referred to as a "touch control screen". The touch sensor 180K is configured to detect a touch operation performed on or near the touch sensor 180K. The touch sensor may transfer the detected touch operation to the application processor to determine a type of a touch event. Visual output related to the touch operation may be provided by the display screen 194. In some other embodiments, the touch sensor 180K may be alternatively disposed on a surface of the electronic device 100 in a position different from that of the display screen 194.

In this embodiment of this application, the touch sensor 180K is configured to detect various touch and press operations in FIG. 1A to FIG. 7B.

A software system of the electronic device 100 may use a layered architecture, an event-driven architecture, a micro core architecture, a micro service architecture, or a cloud architecture. In this embodiment of this application, an Android system with a layered architecture is used as an example to describe the software structure of the electronic device 100.

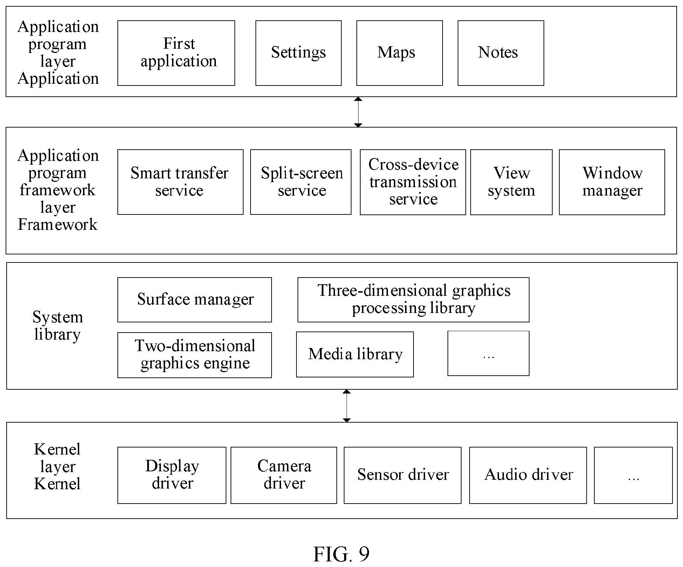

FIG. 9 is a block diagram of a software structure of an electronic device 100 according to an embodiment of this application.

In a layered architecture, software is divided into several layers, and each layer has a clear role and task. The layers are in communication with each other through a software interface. In some embodiments, the Android system is divided into four layers, namely, an application program layer, an application program framework layer, an Android runtime (Android runtime), a system library, and a kernel layer from top to bottom.

The application program layer may include a series of application program packages.

As shown in FIG. 9, the application program package may include application programs such as a first application, Settings, Maps, and Notes.

The first application is a third-party application program or a system application program installed on the electronic device. In this embodiment of this application, the system application program is an application program that is directly provided by an operating system of the electronic device 100 and that is used for implementing a specific function. The three-party application program is an application program that is obtained by the electronic device 100 through the Internet and that is provided by another developer and that is used to implement a specific function. The first application may display the user interface described in the foregoing UI implementations.

The application program framework layer provides an application programming interface (application programming interface, API) and a programming framework for the application program at the application program layer. The application program framework layer includes some predefined functions.

As shown in FIG. 9, the application program framework layer may include a window manager, a view system, a smart transfer service, a split-screen service, a cross-device transmission service, and the like.

The view system includes visual controls such as a control for displaying text and a control for displaying an image that are described above. The view system may be configured to create an application. A display interface may include one or more views. For example, a display interface including a message notification icon may include a view for displaying text and a view for displaying a picture.

In this embodiment of this application, the view system is configured to construct the first application, to display the interface provided by the first application described above. The view system may be further configured to construct and display various types of panels and the like shown in FIG. 1A to FIG. 7B. These panels are provided by a second application other than the first application installed in the electronic device.

The "smart transfer service" is a system service or system function provided by the electronic device in this application, and can support the electronic device in conveniently transmitting content from an application to another application. Specifically, the "smart transfer service" supports the electronic device to display, on a display screen, icons of one or more applications that can be configured to receive the foregoing to-be-transmitted content, and share the to-be-transmitted content to a corresponding application program after an operation of dragging a panel/element corresponding to the to-be-transmitted content to an area of any application icon and releasing is detected.

The "split-screen transmission service" may also be referred to as a "multi-screen collaboration service", and may specifically provide a function of sharing content of a subscreen to another subscreen that performs collaborative processing.

The "cross-device transmission service" may also be referred to as a "multi-device collaboration service", and may specifically provide a function of sharing content of a device to another device that performs collaborative processing.

The system library may include a plurality of functional modules, for example, a surface manager (surface manager), media libraries (media libraries), a three-dimensional graphics processing library (for example, OpenGL ES), and a two-dimensional (2D) graphics engine (for example, an SGL).

The kernel layer is a layer between hardware and software. The kernel layer includes at least a display driver, a camera driver, an audio driver, and a sensor driver.

In should be understood that the steps of the foregoing method embodiments provided in this application may be implemented by using a hardware integrated logic circuit in the processor or instructions in a form of software. The steps of the method disclosed with reference to embodiments of this application may be directly performed and completed by a hardware processor, or may be performed and completed by a combination of hardware in the processor and a software module.

This application further provides an electronic device. The electronic device may include a memory and a processor. The memory may be configured to store a computer program; and the processor may be configured to invoke the computer program in the memory, to enable the electronic device to perform the method in any one of the foregoing embodiments.

This application further provides a chip system. The chip system includes at least one processor, configured to implement a function in the method performed by the electronic device in any one of the foregoing embodiments.

In a possible design, the chip system further includes a memory, the memory is configured to store program instructions and data, and the memory is located inside or outside the processor.

The chip system may include a chip, or may include a chip and another discrete component.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application specific integrated chip (application specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

This application further provides a computer program product. The computer program product includes a computer program (which may also be referred to as code or an instruction). When the computer program is run, a computer is enabled to perform the method performed by the electronic device in any one of the foregoing embodiments.

This application further provides a computer-readable storage medium, and the computer-readable storage medium stores a computer program (which may also be referred to as code or an instruction). When the computer program is run, a computer is enabled to perform the method performed by the electronic device in any one of the foregoing embodiments.

Various implementations of this application may be combined randomly to achieve different technical effects.

All or a part of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the processes or functions according to this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (Solid State Disk)), or the like.

A person of ordinary skill in the art may understand that all or some of the processes of the methods in embodiments may be implemented by a computer program instructing relevant hardware. The program may be stored in a computer-readable storage medium. When the program is executed, the processes of the foregoing method embodiments may be performed. The foregoing storage medium includes: any medium that can store program code, such as a ROM, a random access memory RAM, a magnetic disk, or an optical disc.

In conclusion, what are described above are merely embodiments of the technical solutions of the present invention, and are not intended to limit the scope of protection of the present invention. Any modification, equivalent replacement, improvement, and the like made based on the disclosure of the present invention still fall within the scope of protection of the present invention.

## Claims

1. A content processing method, applied to an electronic device, and comprising:
displaying an interface of a first application, wherein the interface comprises first content;
receiving a touch and hold operation on the first content;
displaying first prompt information in response to that the touch and hold operation lasts for a first duration;
displaying a first panel in response to that the touch and hold operation lasts for a second duration, wherein the first panel comprises the first content, and the second duration is longer than the first duration; and
sharing the first content to a target object in response to a first operation on the first panel.

2. The method according to claim 1, wherein the method further comprises:
displaying second prompt information in response to that the touch and hold operation lasts between the first duration and the second duration, wherein the second prompt information is used for guiding continued input of the touch and hold operation.

3. The method according to claim 2, wherein the second prompt information comprises any one of the following:
a gradually zoomed-out aperture;
a gradually filled progress circle;
gradually diffused light points; or
a fence flashing around the first content.

4. The method according to claim 2 or 3, wherein after the first panel is displayed, the method further comprises: stopping displaying the second prompt information.

5. The method according to any one of claims 1 to 4, wherein the first operation is an operation of dragging to a target area of the interface and releasing.

6. The method according to any one of claims 1 to 5, comprising: stopping displaying the first prompt information in response to the first operation.

7. The method according to any one of claims 1 to 6, wherein the first prompt information is option information that is provided by the first application and that is used for processing the first content.

8. The method according to any one of claims 2 to 4, wherein the second prompt information is information provided by a second application, and the second application is any one of an application program, a service, or a component.

9. The method according to any one of claims 1 to 8, wherein the target area is at an icon of a third application, the target object is the third application, and the sharing the first content to a target object in response to a first operation on the first panel specifically comprises:
receiving an operation of dragging the first panel to a second area;
displaying a menu bar, wherein the menu bar comprises the icon of the third application;
receiving an operation of continuing to drag the first panel to the icon of the third application and releasing; and
sharing the first content to the third application.

10. The method according to claim 9, wherein before the menu bar is displayed, the method further comprises:
displaying a light band in a third area, wherein the third area partially or completely overlaps the second area.

11. The method according to any one of claims 1 to 8, wherein the target area is at a second split-screen, the target object is the second split-screen, and the sharing the first content to a target object in response to a first operation on the first panel specifically comprises:
receiving an operation of dragging the first panel from a first split-screen to the second split-screen and releasing; and
sharing the first content to the second split-screen.

12. The method according to any one of claims 1 to 8, wherein the target area is a fourth area of the electronic device, the target object is a target electronic device, and the sharing the first content to a target object in response to a first operation on the first panel specifically comprises:
receiving an operation of dragging the first panel to the fourth area and releasing; and
sharing the first content to the target electronic device.

13. The method according to any one of claims 1 to 12, wherein after the first operation and before the first content is shared to the target object, the method further comprises:
switching the first panel from a first display form to a second display form.

14. The method according to any one of claims 1 to 13, wherein a coverage rate of the first prompt information over the first content exceeds a preset value.

15. The method according to any one of claims 1 to 14, wherein the first prompt information comprises any one of the following: a toolbar or a floating window.

16. The method according to any one of claims 1 to 15, wherein the first content comprises an image and/or text.

17. The method according to any one of claims 1 to 16, wherein the method further comprises:
obtaining the first content through a screenshot in response to that the touch and hold operation lasts between the first duration and the second duration.

18. A content processing method, applied to an electronic device, and comprising:
displaying an interface of a first application, wherein the interface comprises first content;
receiving a touch and hold operation on the first content;
displaying first prompt information in response to that the touch and hold operation lasts for a first duration;
displaying a first panel in response to that the touch and hold operation lasts for a second duration, wherein the first panel comprises the first content, and the second duration is longer than the first duration;
displaying an editing tool in response to a second operation on the first panel; and
editing the first content into second content in response to an operation on the editing tool.

19. The method according to claim 18, wherein the method further comprises:
sharing the second content to a target object in response to a first operation on the second content.

20. The method according to claim 1, wherein the method further comprises:
displaying second prompt information in response to that the touch and hold operation lasts between the first duration and the second duration, wherein the second prompt information is used for guiding continued input of the touch and hold operation.

21. The method according to claim 2, wherein the second prompt information comprises any one of the following:
a gradually zoomed-out aperture;
a gradually filled progress circle;
gradually diffused light points; or
a fence flashing around the first content.

22. The method according to claim 20 or 21, wherein after the first panel is displayed, the method further comprises: stopping displaying the second prompt information.

23. The method according to any one of claims 18 to 22, wherein the first operation is an operation of dragging to a target area of the interface and releasing.

24. The method according to any one of claims 18 to 23, comprising: stopping displaying the first prompt information in response to the first operation.

25. The method according to any one of claims 18 to 24, wherein the first prompt information is option information that is provided by the first application and that is used for processing the first content.

26. The method according to any one of claims 20 to 22, wherein the second prompt information is information provided by a second application, and the second application is any one of an application program, a service, or a component.

27. The method according to any one of claims 18 to 26, wherein the target area is at an icon of a third application, the target object is the third application, and the sharing the first content to the target object in response to the first operation on the first panel specifically comprises:
receiving an operation of dragging the first panel to a second area;
displaying a menu bar, wherein the menu bar comprises the icon of the third application;
receiving an operation of continuing to drag the first panel to the icon of the third application and releasing; and
sharing the first content to the third application.

28. The method according to any one of claims 18 to 27, wherein before the menu bar is displayed, the method further comprises:
displaying a light band in a third area, wherein the third area partially or completely overlaps the second area.

29. The method according to any one of claims 18 to 28, wherein the target area is at a second split-screen, the target object is the second split-screen, and sharing the first content to the target object in response to the first operation on the first panel specifically comprises:
receiving an operation of dragging the first panel from a first split-screen to the second split-screen and releasing; and
sharing the first content to the second split-screen.

30. The method according to any one of claims 18 to 29, wherein the target area is a fourth area of the electronic device, the target object is a target electronic device, and sharing the first content to the target object in response to the first operation on the first panel specifically comprises:
receiving an operation of dragging the first panel to the fourth area and releasing; and
sharing the first content to the target electronic device.

31. The method according to any one of claims 18 to 30, wherein after the first operation and before the first content is shared to the target object, the method further comprises:
switching the first panel from a first display form to a second display form.

32. The method according to any one of claims 18 to 31, wherein a coverage rate of the first prompt information over the first content exceeds a preset value.

33. The method according to any one of claims 18 to 32, wherein the first prompt information comprises any one of the following: a toolbar or a floating window.

34. The method according to any one of claims 18 to 33, wherein the first content comprises an image and/or text.

35. The method according to any one of claims 18 to 34, wherein the method further comprises:
obtaining the first content through a screenshot in response to that the touch and hold operation lasts between the first duration and the second duration.

36. An electronic device, comprising one or more processors and one or more memories, wherein the one or more memories are coupled to the one or more processors, the one or more memories are configured to store computer program code, the computer program code comprises computer instructions, and when the one or more processors execute the computer instructions, the method according to any one of claims 1 to 35 is performed.

37. A computer-readable storage medium, comprising instructions, wherein when the instructions are run on an electronic device, the method according to any one of claims 1 to 35 is performed.
